# EUROPEAN PATENT APPLICATION

(11) **EP 4 283 996 A1**
(43) Date of publication of application: **29.11.2023**
(21) Application number: 21920856.8
(22) Date of filing: 23.12.2021
(51) Int. Cl.: H04N 19/597

(54) **VOLUMETRIC MEDIA PROCESSING METHOD AND APPARATUS, AND STORAGE MEDIUM AND ELECTRONIC APPARATUS**

(30) Priority: 25.01.2021 CN 202110098943
(71) Applicant: ZTE Corporation, Shenzhen, Guangdong 518057 (CN)
(72) Inventor: HUANG, Cheng, Shenzhen, Guangdong 518057 (CN); BAI, Yaxian, Shenzhen, Guangdong 518057 (CN)
(74) Representative: Novagraaf Technologies
(86) International application number: PCT/CN2021/140959
(87) International publication number: WO 2022/156482

(57) **Abstract**

Provided are a method and apparatus for processing volumetric media, a storage medium, and an electronic apparatus. The method includes: identifying a V3C track and a V3C component track from a container file of a V3C bitstream of the volumetric media; obtaining one or more atlas coding sub-bitstreams by decapsulating the V3C track, and obtaining one or more video coding sub-bitstreams that correspond to the one or more atlas coding sub-bitstreams by decapsulating the V3C component track; and generating V3C data of a 3D spatial region of the volumetric media based on the one or more atlas coding sub-bitstreams and the one or more video coding sub-bitstreams. The problem that waste of a transmission bandwidth and undesired processing complexity are caused by indifferently accessing and processing entire volumetric media data in the related art can be solved, and part of the volumetric media data are processed according to requirements, thus avoiding waste of the transmission bandwidth and reducing processing complexity.

## Description

### Technical Field

Embodiments of the disclosure relate to the field of communication, in particular to a method and apparatus for processing volumetric media, a storage medium, and an electronic apparatus.

### Background

Conventionally, two-dimensional images and videos are used to capture, process, store and present visual scenes. In recent years, an innovation in three-dimensional (3D) volumetric media contents and services featuring a high degree of freedom and true three dimensions has been driven by progress of 3D scene capture and rendering technology. For example, point cloud technology, a typical representative of the volumetric media contents and services, has been extensively used. A point cloud frame consists of a group of independent points in space, and each point can be associated with many other attributes (such as a color, reflectivity and a surface normal) in addition to 3D spatial location attributes. In addition, multi-view videos and free viewpoints, another application of the volumetric media, capture 3D scene information with true or virtual cameras, and support presentation of 3D scenes at six degrees of freedom (6DoF) in a restricted viewing position and direction range.

The moving picture experts group (MPEG) set up MPEG-I standardization project to undertake research on technology of coded representation of immersive media. As one of achievements, a visual volumetric video-based coding (V3C) standard uses a traditional 2D-frame-based video coding tool to encode 3D visual information by projecting 3D information onto a 2D plane. A V3C bitstream includes a V3C unit (V3C Unit), an atlas coding sub-bitstream, a 2D video coding occupancy map sub-bitstream, a 2D video coding geometry sub-bitstream, zero or more 2D video coding attribute sub-bitstreams, and zero or more 2D video coding packed video sub-bitstreams of a V3C parameter set (VPS).

In the related art, volumetric media are composed of an atlas, an occupancy map, a geometry and an attribute. It is highly complex for a play terminal to reconstruct and present volumetric media data since different V3C components of the volumetric media are required to be synchronously obtained and decoded, which presents a user terminal, especially a mobile terminal with a restricted processing capacity with technological challenges during service implementation. Moreover, the volumetric media can provide users with six degrees of freedom (6-DoF) immersive media experience. At any given time, only parts of the volumetric media are visible corresponding to a viewing position and orientation of the user. In many application scenarios, it is unnecessary to access, decode and render entire volumetric media data. Waste of a transmission bandwidth and undesired processing complexity are caused by indifferently accessing and processing the entire volumetric media data.

The problem that waste of the transmission bandwidth and undesired processing complexity are caused by indifferently accessing and processing the entire volumetric media data in the related art has not been solved yet.

### Summary

Embodiments of the disclosure provide a method and apparatus for processing volumetric media, a storage medium, and an electronic apparatus for at least solving the problem that waste of a transmission bandwidth and undesired processing complexity are caused by indifferently accessing and processing entire volumetric media data in the related art.

According to an embodiment of the disclosure, a method for processing volumetric media is provided. The method includes: identifying a V3C track and a V3C component track from a container file of a V3C bitstream of the volumetric media, where the V3C track and the V3C component track correspond to three-dimensional (3D) spatial regions of the volumetric media; obtaining one or more atlas coding sub-bitstreams by decapsulating the V3C track, and obtaining one or more video coding sub-bitstreams that correspond to the one or more atlas coding sub-bitstreams by decapsulating the V3C component track; and decoding the one or more atlas coding sub-bitstreams and the one or more video coding sub-bitstreams, and generating the 3D spatial region of the volumetric media.

According to another embodiment of the disclosure, a method for processing volumetric media is further provided. The method includes: encapsulating one or more atlas coding sub-bitstreams into a V3C track, and encapsulating one or more video coding sub-bitstreams that correspond to the one or more atlas coding sub-bitstreams into a V3C component track; and generating a container file of a V3C bitstream of the volumetric media according to the V3C track and the V3C component track, where the V3C track and the V3C component track correspond to one or more 3D spatial regions of the volumetric media.

According to another embodiment of the disclosure, a method for processing volumetric media is provided. The method includes: identifying a V3C atlas track from a container file of a V3C bitstream of the volumetric media, and identifying one or more atlas tiles based on an element in a sample entry of the V3C atlas track, where the one or more atlas tiles correspond to 3D spatial regions of the volumetric media; obtaining one or more atlas coding sub-bitstreams by decapsulating the V3C atlas track, and obtaining one or more video coding sub-bitstreams by decapsulating one or more V3C component tracks that correspond to the one or more atlas tiles; and decoding the one or more atlas coding sub-bitstreams and the one or more video coding sub-bitstreams, and generating the 3D spatial region of the volumetric media.

According to another embodiment of the disclosure, an apparatus for processing volumetric media is further provided. The apparatus includes: a first identification module configured to identify a V3C track and a V3C component track from a container file of a V3C bitstream of the volumetric media, where the V3C track and the V3C component track correspond to 3D spatial regions of the volumetric media; a first decapsulation module configured to obtain one or more atlas coding sub-bitstreams by decapsulating the V3C track, and obtain one or more video coding sub-bitstreams that correspond to the one or more atlas coding sub-bitstreams by decapsulating the V3C component track; and a first decoding module configured to decode the one or more atlas coding sub-bitstreams and the one or more video coding sub-bitstreams, and generate V3C data of the 3D spatial region of the volumetric media.

According to another embodiment of the disclosure, an apparatus for processing volumetric media is further provided. The apparatus includes: a encapsulating module configured to pack one or more atlas coding sub-bitstreams into a V3C track, and pack one or more video coding sub-bitstreams that correspond to the one or more atlas coding sub-bitstreams into a V3C component track; and a generation module configured to generate a container file of a V3C bitstream of the volumetric media according to the V3C track and the V3C component track, where the V3C track and the V3C component track correspond to one or more 3D spatial regions of the volumetric media.

According to another embodiment of the disclosure, an apparatus for processing volumetric media is further provided. The apparatus includes: a second identification module configured to identify a V3C atlas track from a container file of a V3C bitstream of the volumetric media, and identify one or more atlas tiles based on an element in a sample entry of the V3C atlas track, where the one or more atlas tiles correspond to 3D spatial regions of the volumetric media; a second decapsulation module configured to obtain one or more atlas coding sub-bitstreams by decapsulating the V3C atlas track, and obtain one or more video coding sub-bitstreams by decapsulating one or more V3C component tracks that correspond to the one or more atlas tiles; and a second decoding module configured to decode the one or more atlas coding sub-bitstreams and the one or more video coding sub-bitstreams, and generate the 3D spatial region of the volumetric media.

According to yet another embodiment of the disclosure, a computer-readable storage medium is further provided. The storage medium stores a computer program, where the computer program is configured to execute steps of any method embodiment above when being run.

According to still another embodiment of the disclosure, an electronic apparatus is further provided. The electronic apparatus includes a memory and a processor, the memory stores a computer program, and the processor is configured to execute steps of any method embodiment above by running the computer program.

According to the embodiments of the disclosure, the V3C track and the V3C component track are identified from the container file of the V3C bitstream of the volumetric media, the V3C track and the V3C component track correspond to the 3D spatial regions of the volumetric media, the one or more atlas coding sub-bitstreams are obtained by decapsulating the V3C track, and the one or more video coding sub-bitstreams that correspond to the one or more atlas coding sub-bitstreams are obtained by decapsulating the V3C component track; and the V3C data of the 3D spatial region of the volumetric media are generated based on the one or more atlas coding sub-bitstreams and the one or more video coding sub-bitstreams. The problem that waste of the transmission bandwidth and undesired processing complexity are caused by indifferently accessing and processing the entire volumetric media data in the related art can be solved, and part of the volumetric media data are processed according to requirements, thus avoiding waste of the transmission bandwidth and reducing processing complexity.

### Brief Description of the Drawings

Fig. 1 is a block diagram of a hardware structure of a mobile terminal of a method for processing volumetric media according to an embodiment of the disclosure;
Fig. 2 is a flowchart 1 of a method for processing volumetric media according to an embodiment of the disclosure;
Fig. 3 is a flowchart 2 of a method for processing volumetric media according to an embodiment of the disclosure;
Fig. 4 is a flowchart 3 of a method for processing volumetric media according to an embodiment of the disclosure;
Fig. 5 is a schematic diagram 1 of a V3C container file encapsulated into a plurality of tracks according to an embodiment;
Fig. 6 is a schematic diagram 2 of a V3C container file encapsulated into a plurality of tracks according to an embodiment;
Fig. 7 is a flowchart 1 of a method for processing volumetric media according to a preferred embodiment;
Fig. 8 is a schematic diagram 3 of a V3C container file encapsulated into a plurality of tracks according to an embodiment;
Fig. 9 is a schematic diagram 4 of a V3C container file encapsulated into a plurality of tracks according to an embodiment;
Fig. 10 is a schematic diagram 5 of a V3C container file encapsulated into a plurality of tracks according to an embodiment;
Fig. 11 is a flowchart 2 of a method for processing volumetric media according to a preferred embodiment;
Fig. 12 is a schematic diagram 6 of a V3C container file encapsulated into a plurality of tracks according to an embodiment;
Fig. 13 is a schematic diagram 7 of a V3C container file encapsulated into a plurality of tracks according to an embodiment;
Fig. 14 is a flowchart 3 of a method for processing volumetric media according to a preferred embodiment;
Fig. 15 is a schematic diagram 8 of a V3C container file encapsulated into a plurality of tracks according to an embodiment;
Fig. 16 is a flowchart 5 of a method for processing volumetric media according to a preferred embodiment;
Fig. 17 is a schematic diagram 9 of a V3C container file encapsulated into a plurality of tracks according to an embodiment;
Fig. 18 is a block diagram 1 of an apparatus for processing volumetric media according to an embodiment;
Fig. 19 is a block diagram 2 of an apparatus for processing volumetric media according to an embodiment; and
Fig. 20 is a block diagram 3 of an apparatus for processing volumetric media according to an embodiment.

### Detailed Description of the Embodiments

Embodiments of the disclosure will be described in detail below with reference to accompanying drawings and in conjunction with the embodiments.

It should be noted that terms such as "first" and "second" in the description, the claims and the accompanying drawings above of the disclosure are used to distinguish similar objects, rather than to describe a specific sequence or a precedence order.

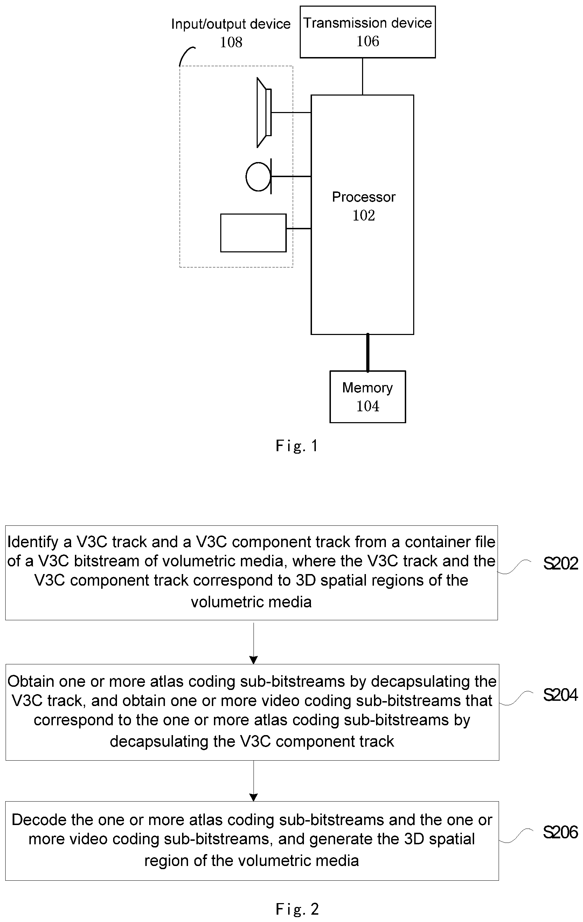

A method embodiment provided in the embodiments of the disclosure may be executed in a mobile terminal, a computer terminal or a similar computation apparatus. With running on a mobile terminal as an embodiment, Fig. 1 is a block diagram of a hardware structure of a mobile terminal of a method for processing volumetric media according to an embodiment of the disclosure. As shown in Fig. 1, the mobile terminal may include one or more (merely one is shown in Fig. 1) processors 102 (the processors 102 may include, but is not limited to, a processing devices such as a microcontroller unit (MCU) or a field programmable gate array (FPGA)) and a memory 104 for storing data. The mobile terminal above may further include a transmission device 106 for a communication function and an input and output device 108. It can be understood by those skilled in the art that a structure shown in Fig. 1 is merely schematic and does not limit a structure of the mobile terminal above. For example, the mobile terminal may further include more or fewer components than those shown in Fig. 1, or have a configuration different from that shown in Fig. 1.

The memory 104 may be used to store a computer program, for example, a software program and module of application software, such as a computer program corresponding to the method for processing volumetric media in the embodiment of the disclosure. The processor 102 executes various functional applications and service chain address pool slice processing, that is, implements the method above, by running the computer program stored in the memory 104. The memory 104 may include a high-speed random access memory, and may further include a non-volatile memory, such as one or more magnetic storage apparatuses, a flash memory, or other non-volatile solid-state memories. In some embodiments, the memory 104 may further include memories remotely arranged with respect to the processor 102, and these remote memories may be connected to the mobile terminal through a network. Instances of the network above include, but are not limited to, the Internet, an Intranet, a local area network, a mobile communication network and their combinations.

The transmission apparatus 106 is used to receive or transmit data via one network. Specific instances of the network above may include a wireless network provided by a communication provider of the mobile terminal. In an embodiment, the transmission apparatus 106 includes a network interface controller (NIC), and may be connected to other network devices through a base station so as to communicate with the Internet. In an embodiment, the transmission apparatus 106 may be a radio frequency (RF) module that is used to communicate with the Internet in a wireless mode.

This embodiment provides the method for processing volumetric media that runs on the mobile terminal above or a network architecture. Fig. 2 is a flowchart 1 of a method for processing volumetric media according to an embodiment of the disclosure. As shown in Fig. 2, a process includes:
S202, a V3C track and a V3C component track are identified from a container file of a V3C bitstream of the volumetric media, where the V3C track and the V3C component track correspond to three-dimensional (3D) spatial regions of the volumetric media.

In this embodiment, the video coding sub-bitstream includes at least one of an occupancy map data bitstream, a geometry data bitstream, an attribute data bitstream, and a packed video data bitstream.

S204, one or more atlas coding sub-bitstreams are obtained by decapsulating the V3C track, and one or more video coding sub-bitstreams that correspond to the one or more atlas coding sub-bitstreams are obtained by decapsulating the V3C component track.

S206, the one or more atlas coding sub-bitstreams and the one or more video coding sub-bitstreams are decoded, and the 3D spatial region of the volumetric media is generated.

Through S202-S206, the problem that waste of a transmission bandwidth and undesired processing complexity are caused by indifferently accessing and processing entire volumetric media data in the related art can be solved, and part of the volumetric media data are processed according to requirements, thus avoiding waste of the transmission bandwidth and reducing processing complexity.

In an embodiment, S202 may specifically include:
one or more V3C atlas tracks are identified based on a type of a sample entry of the V3C track, and one or more packed video component tracks are identified based on the one or more V3C atlas tracks, where the V3C track includes the one or more V3C atlas tracks, and the V3C component track includes the one or more packed video component tracks. Further, the one or more V3C atlas tracks are identified based on the type of the sample entry of the V3C track, and one or more packed video component tracks referenced by the V3C atlas track are identified based on an element in a sample entry of the one or more V3C atlas tracks; or the one or more V3C atlas tracks are identified based on the type of the sample entry of the V3C track, one or more V3C atlas tile tracks referenced by the one or more V3C atlas tracks are identified based on an element in a sample entry of the one or more V3C atlas tracks, and one or more packed video component tracks referenced by the one or more V3C atlas tile tracks are identified.

In another embodiment, S202 may further specifically include:
one or more V3C atlas tracks are identified based on a V3C timed metadata track, and one or more packed video component tracks are identified based on the one or more V3C atlas tracks, where the V3C track includes the one or more V3C atlas tracks, and the V3C component track includes the one or more packed video component tracks. Further, the V3C timed metadata track is identified based on a type of a sample entry of a timed metadata track, one or more V3C atlas tracks referenced by the V3C timed metadata track are identified based on an element in a sample entry or a sample of the V3C timed metadata track, and one or more packed video component tracks referenced by the one or more V3C atlas tracks are identified; or the V3C timed metadata track is identified based on a type of a sample entry of a timed metadata track, one or more V3C atlas tracks referenced by the V3C timed metadata track are identified based on an element in a sample entry or a sample of the V3C timed metadata track, one or more V3C atlas tile tracks referenced by the one or more V3C atlas tracks are identified, and one or more packed video component tracks referenced by the one or more V3C atlas tile tracks are identified.

In an embodiment, S206 may further specifically include:
the one or more atlas coding sub-bitstreams that are encapsulated into the V3C track are decoded, and the one or more video coding sub-bitstreams that are encapsulated into the V3C component track and correspond to the one or more atlas coding sub-bitstreams are decoded. Further, one or more atlas tiles in one or more atlas coding sub-bitstreams that are encapsulated into one or more V3C atlas tracks are decoded, and one or more packed video sub-bitstreams that are encapsulated into one or more packed video component tracks and correspond to the one or more atlas tiles are decoded, where the one or more video coding sub-bitstreams are the one or more packed video sub-bitstreams, the V3C track includes the one or more V3C atlas tracks, and the V3C component track includes the one or more packed video component tracks; or
one or more atlas tiles in one or more atlas coding sub-bitstreams that are encapsulated into one or more V3C atlas tile tracks are decoded, and one or more packed video sub-bitstreams that are encapsulated into one or more packed video component tracks and correspond to the one or more atlas tiles are decoded, where the V3C track includes the one or more V3C atlas tile tracks, and the V3C component track includes the one or more packed video component tracks.

In another embodiment, S206 may further specifically include:
one or more atlas tiles in one or more atlas coding sub-bitstreams that are encapsulated into one or more V3C atlas tracks are decoded, and one or more packed video bitstream subsamples that are encapsulated into one or more packed video component tracks and correspond to the one or more atlas tiles are decoded, where the one or more video coding sub-bitstreams include the one or more packed video bitstream subsamples, the V3C track includes the one or more V3C atlas tracks, and the V3C component track includes the one or more packed video component tracks.

In an illustrative embodiment, the packed video bitstream subsample includes one or more V3C units that correspond to one atlas tile, where the V3C unit includes at least geometry data, attribute data and occupancy map data.

In another illustrative embodiment, the packed video bitstream subsample includes one V3C unit, where the V3C unit includes at least geometry data, attribute data and occupancy map data.

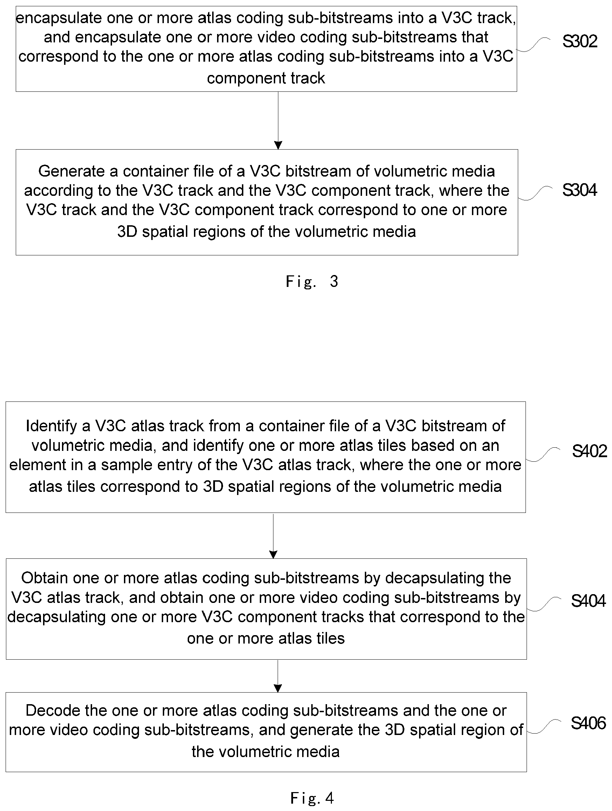

According to another aspect of this embodiment, a method for processing volumetric media is further provided. Fig. 3 is a flowchart 2 of a method for processing volumetric media according to an embodiment of the disclosure. As shown in Fig. 3, a process includes:
S302, one or more atlas coding sub-bitstreams are encapsulated into a V3C track, and one or more video coding sub-bitstreams that correspond to the one or more atlas coding sub-bitstreams are encapsulated into a V3C component track.

In this embodiment, the video coding sub-bitstream includes at least one of an occupancy map data bitstream, a geometry data bitstream, an attribute data bitstream, and a packed video data bitstream.

S304, a container file of a V3C bitstream of the volumetric media is generated according to the V3C track and the V3C component track, where the V3C track and the V3C component track correspond to one or more 3D spatial regions of the volumetric media.

Through S302-S304, the problem that waste of a transmission bandwidth and undesired processing complexity are caused by indifferently accessing and processing entire volumetric media data in the related art can be solved, and part of the volumetric media data are processed according to requirements, thus avoiding waste of the transmission bandwidth and reducing processing complexity.

In an embodiment, S302 may specifically include: the one or more atlas coding sub-bitstreams are encapsulated into one or more V3C atlas tracks, and one or more packed video sub-bitstreams that correspond to the one or more atlas coding sub-bitstreams are encapsulated into one or more packed video component tracks, where the V3C track includes the one or more V3C atlas tracks, the V3C component track includes the one or more packed video component tracks, and the one or more video coding sub-bitstreams are the one or more packed video sub-bitstreams.

In an illustrative embodiment, the step that the one or more atlas coding sub-bitstreams are encapsulated into one or more V3C atlas tracks, and one or more packed video sub-bitstreams that correspond to the one or more atlas coding sub-bitstreams are encapsulated into one or more packed video component tracks may specifically include: one or more atlas tiles in the one or more atlas coding sub-bitstreams are encapsulated into the one or more V3C atlas tracks, and one or more packed video sub-bitstreams that correspond to the one or more atlas tiles are encapsulated into the one or more packed video component tracks. Further, the one or more atlas coding sub-bitstreams are encapsulated into the one or more V3C atlas tracks, the one or more atlas tiles in the one or more atlas coding sub-bitstreams are encapsulated into the one or more V3C atlas tile tracks, and the one or more packed video sub-bitstreams that correspond to the one or more atlas tiles are encapsulated into the one or more packed video component tracks, where the one or more V3C atlas tile tracks reference to the one or more packed video component tracks.

In another illustrative embodiment, the step that the one or more atlas coding sub-bitstreams are encapsulated into one or more V3C atlas tracks, and one or more packed video sub-bitstreams that correspond to the one or more atlas coding sub-bitstreams are encapsulated into one or more packed video component tracks may specifically include: a timed metadata bitstream is encapsulated into a V3C timed metadata track, the one or more atlas coding sub-bitstreams are encapsulated into the one or more V3C atlas tracks, and a packed video bitstream subsample that corresponds to the one or more atlas coding sub-bitstreams is encapsulated into the one or more packed video component tracks, where the V3C timed metadata track reference to the one or more V3C atlas tracks, and the one or more V3C atlas tracks reference to the one or more packed video component tracks. Further, the step that the one or more atlas coding sub-bitstreams are encapsulated into the one or more V3C atlas tracks, and a packed video bitstream subsample that corresponds to the one or more atlas coding sub-bitstreams is encapsulated into the one or more packed video component tracks includes: the one or more atlas coding sub-bitstreams are encapsulated into the one or more V3C atlas tracks, one or more atlas tiles in the one or more atlas coding sub-bitstreams are encapsulated into one or more V3C atlas tile tracks, and one or more packed video sub-bitstreams that correspond to the one or more atlas tiles are encapsulated into the one or more packed video component tracks, where the one or more V3C atlas tracks reference to the one or more V3C atlas tile tracks, and the one or more V3C atlas tile tracks reference to the one or more packed video component tracks.

In another embodiment, S302 may further include: one or more atlas tiles in the one or more atlas coding sub-bitstreams are encapsulated into one or more V3C atlas tracks, and a packed video bitstream subsample that corresponds to the one or more atlas tiles is encapsulated into one or more packed video component tracks, where the one or more video coding sub-bitstreams include the one or more packed video bitstream subsamples, the V3C track includes the one or more V3C atlas tracks, and the V3C component track includes the one or more packed video component tracks.

In an illustrative embodiment, the packed video bitstream subsample includes one or more V3C units that correspond to one atlas tile, where the V3C unit includes at least geometry data, attribute data and occupancy map data.

In an illustrative embodiment, the packed video bitstream subsample includes one V3C unit, where the V3C unit includes at least geometry data, attribute data and occupancy map data.

According to another aspect of this embodiment, a method for processing volumetric media is further provided. Fig. 4 is a flowchart 3 of a method for processing volumetric media according to an embodiment of the disclosure. As shown in Fig. 4, a process includes:
S402, a V3C atlas track is identified from a container file of a V3C bitstream of the volumetric media, and one or more atlas tiles are identified based on an element in a sample entry of the V3C atlas track, where the one or more atlas tiles correspond to 3D spatial regions of the volumetric media.

S404, one or more atlas coding sub-bitstreams are obtained by decapsulating the V3C atlas track, and one or more video coding sub-bitstreams are obtained by decapsulating one or more V3C component tracks that correspond to the one or more atlas tiles.

S406, the one or more atlas coding sub-bitstreams and the one or more video coding sub-bitstreams are decoded, and the 3D spatial region of the volumetric media is generated.

In an illustrative embodiment, S404 may specifically include:
the one or more V3C component tracks are identified from the container file of the V3C bitstream of the volumetric media, where an element in a sample entry of the one or more V3C component tracks includes an identifier of the one or more atlas tiles.

In another illustrative embodiment, S404 may specifically include:
one or more packed video component tracks are identified from the container file of the V3C bitstream of the volumetric media, where an element in a sample entry of the one or more V3C component tracks includes an identifier of the one or more atlas tiles, and the one or more V3C component tracks include the one or more packed video component tracks.

In an alternative embodiment, the method further includes: one or more packed video component tracks are identified from the container file of the V3C bitstream of the volumetric media, where a subsample information box of the one or more packed video component tracks includes an identifier of the one or more atlas tiles, and the one or more V3C component tracks include the one or more packed video component tracks.

In this embodiment, S406 may specifically include:
the one or more atlas tiles in the one or more atlas coding sub-bitstreams, and one or more packed video bitstream subsamples that are in the one or more video coding sub-bitstreams and correspond to the one or more atlas tiles are decoded.

The packed video bitstream subsample includes one or more V3C units that correspond to one atlas tile, where the V3C unit includes at least geometry data, attribute data and occupancy map; or
the packed video bitstream subsample includes one V3C unit, where the V3C unit includes at least geometry data, attribute data and occupancy map data.

This embodiment may be used for video coding volumetric media processing, and volumetric media data are stored in a container file of an ISO base media file format (ISOBMFF). The ISO base media file format consists of several data boxes, each data box has a type and a length, and may be regarded as a data object. One data box may include another data box, and is referred to as a container data box. An ISO base media file may first have one and merely one "ftyp" type data box that is a flag of the file format and includes some information about the file. Then, the ISO base media file may have one and merely one "MOOV" type movie box that is a container data box, and has a data sub-box including metadata information about media. Media data of the ISO base media file are included in a "mdat" type media data box that is also a container data box. A plurality of media data boxes may be provided or not (in the case that the media data reference to other files entirely), and a structure of the media data is described by metadata.

The timed metadata track is a mechanism for establishing timed metadata associated with a specific sample in the ISO base media file format. Timed metadata are less coupled with the media data and are usually descriptive.

In some embodiments, the V3C bitstream is encapsulated into a single track of the ISO base media file. A sample of the V3C bitstream includes one or more V3C units belonging to the same presentation time, that is, one V3C access unit. A header of the V3C unit and a payload data structure of the V3C unit may be retained in the bitstream.

In some embodiments, the V3C units in the V3C bitstream are mapped to different tracks of the ISO base media file according to types. Different partitions of the V3C bitstream (such as one or more atlas coding sub-bitstreams, video coding occupancy map sub-bitstreams, geometry sub-bitstreams, attribute sub-bitstreams, and packed video sub-bitstreams) are encapsulated into different tracks of the ISO base media file.

There are three types of tracks in a multi-track encapsulating container file of the V3C bitstream: a V3C atlas track, a V3C atlas tile track and a V3C component track.

A sample entry type of a sample entry (V3CAtlasSampleEntry) of the V3C atlas track equals to one of "v3c1 ", "v3cg", "v3cb", "v3a1 "or "v3ag". One V3C atlas track should not include a network abstraction layer (NAL) unit belonging to a plurality of atlases.

When the V3C bitstream includes a single atlas, a V3C atlas track having a type of a sample entry of "v3c1" or "v3cg" should be used. When the V3C bitstream includes a plurality of atlases, each atlas sub-bitstream should be stored as a separate V3C atlas track. In the case of a universal V3C atlas track having a type of a sample entry of "v3cb", the track should not include an atlas coding NAL unit corresponding to any atlas. Types of sample entries of other V3C atlas tracks are "v3a1 " or "v3ag".

A sample entry type of a sample entry (V3CAtlasSampleTileEntry) of the V3C atlas tile track is "v3c1". The V3C atlas tile track should merely include atlas coding NAL units belonging to the same atlas. The V3C atlas tile track should include an atlas coding NAL unit of at least one atlas tile.

In the container file of the volumetric media, the V3C component track uses a restricted sample entry 'resv' to represent restricted video coding data of a carried V3C video component. A restricted scheme information box includes a scheme type box having a scheme type (scheme_type) set to 'vvvc' and a scheme information box.

The scheme information box includes a V3C atlas tile configuration data box (V3CAtlasTileConfigurationBox) that indicates an identifier of one or more atlas tiles corresponding to the V3C component track, and is defined as follows:

```
   Syntax
   class V3CAtlasTileConfigurationBox extends Box('v3cT') {
        unsigned int(16) num_tiles;
        for(i=0; i < num_tiles; i++){
           unsigned int(16) tile_id;
        }
   }
```

### Semantics

The above num_tiles indicates the number of atlas tiles included in the track.

The above tile_id indicates an identifier of an atlas tile included in the track.

In this embodiment, according to the atlas tile identifier carried in the V3C atlas tile configuration data box in the restricted sample entry of the V3C component track, the one or more V3C component tracks corresponding to the one or more atlas tiles are identified, and the one or more atlas tiles correspond to the 3D spatial regions of the volumetric media.

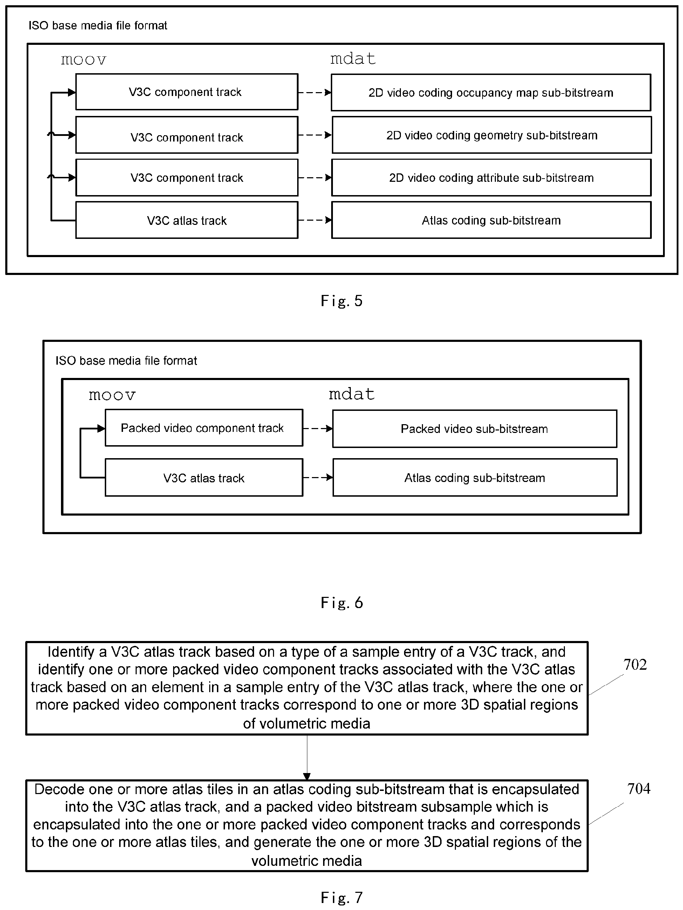

Fig. 5 is a schematic diagram 1 of a V3C container file encapsulated into a plurality of tracks according to an embodiment. As shown in Fig. 5, the V3C container file encapsulated into a plurality of tracks should at least include one V3C atlas track, the track reference to zero or more V3C atlas tile tracks or zero or more V3C component tracks. The V3C atlas tile track (if any) reference to one or more V3C component tracks.

As for the V3C atlas track, a sample entry of the track includes a V3C parameter set and an atlas parameter set, and samples carrying atlas sub-bitstream NAL units. The V3C atlas track also include reference to the V3C component track of the V3C unit (i.e., unit types V3C_OVD, V3C_GVD, V3C_AVD and V3C_PVD) that carrying video coding, and may include reference to the V3C atlas tile track.

As for the zero or more V3C component tracks, a sample in the track includes an access unit of a video-coded bitstream for occupancy map data (i.e., payloads of V3C units of type V3C_OVD).

As for the one or more V3C component tracks, a sample in the track includes an access unit of a video-coded bitstream for geometry data ( i.e., payloads of V3C units of type V3C_GVD).

As for the zero or more V3C component tracks, the sample in the track includes an access unit of a video-coded bitstream for attribute data (i.e., payloads of V3C units of type V3C_AVD).

As for the zero or more V3C component tracks, the sample in the track includes an access unit of a packed video data bitstream (i.e., payloads of V3C units of type V3C_PVD).

Different from traditional media data, the volumetric media comprises a plurality of V3C components including an atlas, an occupancy map, a geometry and an attribute. It is highly complex for a play terminal to reconstruct and present volumetric media data since different V3C components of the volumetric media are required to be synchronously obtained and decoded, which presents a user terminal, especially a mobile terminal with a restricted processing capacity with technological challenges during service implementation. Moreover, the volumetric media can provide users with six degrees of freedom (6-DoF) immersive media experience. At any given time, only part of the volumetric media is visible corresponding to a viewing position and orientation of the user. In many application scenarios, it is unnecessary to access, decode and render entire volumetric media data. In the prior art, waste of a transmission bandwidth and undesired processing complexity are caused by indifferently accessing and processing the entire volumetric media data. The method includes:
one or more V3C tracks and one or more V3C component tracks are identified from a container file of a V3C bitstream, where the one or more V3C tracks and the one or more V3C component tracks correspond to one or more 3D spatial regions of the volumetric media.

One or more atlas tiles in one or more atlas coding sub-bitstreams that are encapsulated into the one or more V3C atlas tracks are decoded, and one or more video coding sub-bitstreams that are encapsulated into the one or more V3C component tracks and correspond to the one or more atlas tiles are decoded, and the one or more 3D spatial regions of the volumetric media are generated.

### Instance 1: a method for processing volumetric media including a static spatial region

### Alternative embodiment 1: a single V3C atlas track

Fig. 6 is a schematic diagram 2 of a V3C container file encapsulated into a plurality of tracks according to an embodiment. As shown in Fig. 6, a V3C bitstream is encapsulated into a V3C atlas track and a packed video component track of an ISO base media file. The V3C atlas track includes an atlas coding sub-bitstream, and the packed video component track includes a packed video coding sub-bitstream of a V3C video component (for example, geometry data, attribute data, and occupancy map data). The V3C atlas track includes reference to the packed video component track.

Fig. 7 is a flowchart 1 of a method for processing volumetric media according to a preferred embodiment, as shown in Fig. 7, the method includes:
Step 702: a V3C atlas tracks is identified based on a type of a sample entry of a V3C track, and one or more packed video component tracks associated with the V3C atlas track are identified based on an element in a sample entry of the V3C atlas track, where the one or more packed video component tracks correspond to one or more 3D spatial regions of the volumetric media.

Step 704: one or more atlas tiles in an atlas coding sub-bitstream that is encapsulated into the V3C atlas track are decoded, and a packed video bitstream subsample that is encapsulated into the one or more packed video component tracks and corresponds to the one or more atlas tiles are decoded, and the one or more 3D spatial regions of the volumetric media are generated.

Step 702 records a process that the V3C atlas track and the packed video component track that correspond to the three-dimensional spatial regions of the volumetric media are identified based on the element in the sample entry of the V3C atlas track. The element in the sample entry of the V3C atlas track will be described in conjunction with an alternative embodiment below.

The sample entry of the V3C atlas track includes a V3C spatial region data box (V3CspatialRegionsBox) that provides a static three-dimensional spatial region in the volumetric media and its associated track information, as defined as follows:

| | |
|---|---|
| Box Types: | 'vpsr' |
| Container: | V3CAtlasSampleEntry ('v3c1' or 'v3cg') or DynamicVolumetricMetadataSampleEntry |
| Mandatory: | No |
| Quantity: | Zero or one |

```
   Syntax
   aligned(8) class V3CSpatialRegionsBox extends FullBox('vpsr', 0 ,0) {
       bit(1) all_tiles_in_single_track_flag;
            bit(1) packed_video_track_flag;
            bit(7) reserved = 0;
            unsigned int(16) num_regions;
            for (i=0; i < num_regions; i++) {
          3dSpatialRegionStruct(1);
          if (all_tiles_in_single_track_flag) {
            if (packed_video_track_flag) {
                unsigned int(32) packed_video_track_id;
                unsigned int(8) num_tiles;
                for (k=0; k < num_tiles; k++) {
                    unsigned int(16) tile_id;
                }
            } else {
               unsigned int(8) num_track_groups;
               for (j=0; j < num_track_groups; j++) {
                  unsigned int(32) component_track_group_id;
                  unsigned int(8) num_tiles;
                  for (k=0; k < num_tiles; k++) {
                    unsigned int(16) tile_id;
                  }
              }
       } else {
            unsigned int(8) num_tile_tracks;
            for (j=0; j < num_tile_tracks; j++) {
                unsigned int(32) tile_track_id;
            }
                }
       }
   } 
```

The above all_tiles_in_single_track_flag indicates whether all atlas tiles of the atlas coding sub-bitstream are encapsulated into the V3C atlas track or separately encapsulated into V3C atlas tile tracks. A value of 1 indicates that all the atlas tiles are encapsulated into the V3C atlas track, and a value of 0 indicates that the atlas tiles are encapsulated into separate atlas tile tracks.

The above packed_video_track_flag indicates whether the V3C atlas track reference to the packed video component track. A value of 1 indicates presence of the packed video component track associated with the V3C atlas track, and a value of 0 indicates absence of the packed video component track associated with the V3C atlas track.

The above num_regions indicates the number of 3D spatial regions in the volumetric media.

The above packed_video_track_id indicates a packed video component track identifier associated with the 3D spatial region.

The above num_tile indicates the number of atlas tiles associated with the 3D spatial region.

The above tile_id indicates an atlas coding NAL unit including an atlas tile corresponding to the 3D spatial region.

In order to simplify accessing and processing of the volumetric media data, according to this embodiment, the V3C spatial region data box is defined for the V3C atlas track, and the one or more atlas tiles are identified based on information in the V3C spatial region data box in the sample entry of the V3C atlas track, and the one or more atlas tiles correspond to the 3D spatial regions of the volumetric media.

Step 704 records a process that the packed video bitstream subsample that is encapsulated into the one or more packed video component tracks and corresponds to the atlas tile is decoded, and V3C data of the 3D spatial region of the volumetric media are generated. The packed video component track and the packed video bitstream subsample are described in conjunction with an alternative embodiment below.

A packed video packs original video data of V3C video components (for example, geometry data, attribute data and occupancy map data) corresponding to the same atlas tile in one or more packed video frames, and codes the original video data into an packed video data bitstream. Although the packed video frame can effectively reduce the number of video decoders for volumetric media processing, it is necessary to divide the packed video frames into one or more rectangular regions according to different types (for example, geometry data, attribute data, and occupancy map data) of the V3C video component and accurately map the rectangular region to one atlas tile.

In order to simplify accessing and processing of the packed video data, according to this embodiment, the packed video bitstream subsample is defined for the packed video component track. Atlas tile information of the packed video bitstream subsample indicates one or more packed video bitstream subsamples that are in the packed video component track and correspond to the one or more atlas tiles, and the one or more atlas tiles correspond to the 3D spatial regions of the volumetric media.

A sample table box of the packed video component track or a track fragment box of each movie fragment box includes a subsample information box where a packed video bitstream subsample is listed.

According to this embodiment, the packed video bitstream subsample is defined according to a value of a flag field in the subsample information box. The flag field is used to specify a type of subsample information provided in the data box.

When a value of the "flag" field equals "0", the packed video bitstream subsample is defined based on the V3C unit, that is, merely a specific type of V3C unit (V3C Unit) is included in one subsample. A 32-bit unit header representing the V3C unit of the subsample is copied into a 32-bit coding and decoding specific parameter ("codec_specific_parameters") field of a subsample entry in the subsample information box. A type of a V3C unit of each subsample is identified by parsing the coding and decoding specific parameter field of the subsample entry in the subsample information box.

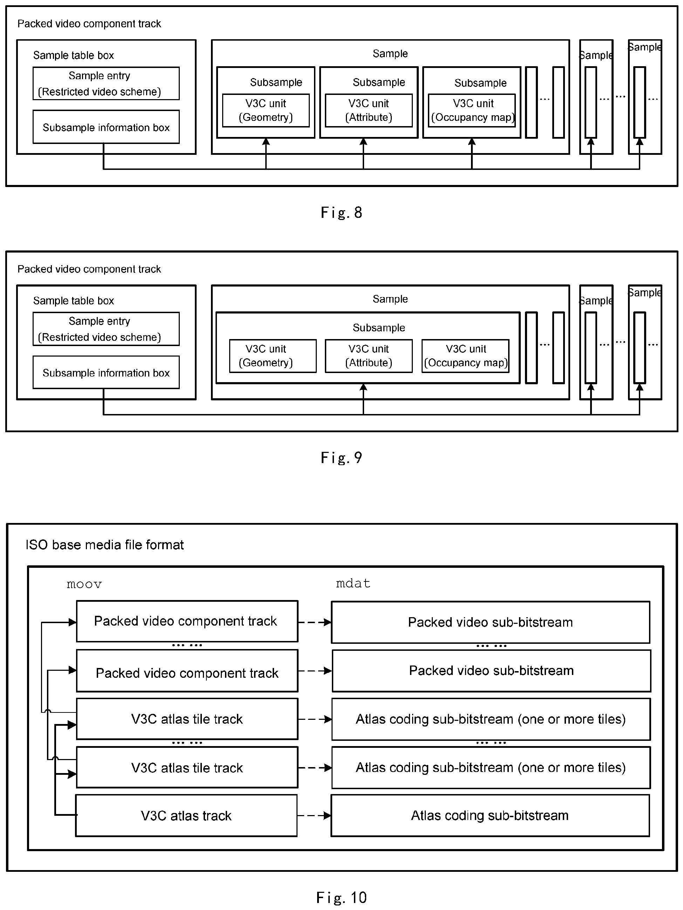

Fig. 8 is a schematic diagram 3 of a V3C container file encapsulated into a plurality of tracks according to an embodiment. As shown in Fig. 8, a sample table box of the packed video component track includes a subsample information box where a packed video bitstream subsample is listed. One packed video bitstream subsample includes one V3C unit, and types of the V3C unit at least include geometry data, attribute data and occupancy map data.

When a value of the "flag" field equals "1", the packed video bitstream subsample is defined based on an atlas tile, that is, one or more continuous V3C units (V3C Unit) that correspond to the same atlas tile are included in one subsample.

Fig. 9 is a schematic diagram 4 of a V3C container file encapsulated into a plurality of tracks according to an embodiment. As shown in Fig. 9, a sample table box of the packed video component track includes a subsample information box where a packed video bitstream subsample is listed. One packed video bitstream subsample is composed of one or more V3C units that are in a packed video bitstream and correspond to one atlas tile, and types of the V3C unit at least include geometry data, attribute data and occupancy map data.

According to an alternative embodiment of the disclosure, the coding and decoding specific parameter field in the subsample information box above is defined as follows:

```
   if (flags == 0) {
       unsigned int(8) tile_id;
       unsigned int(2) type_id;
       if (type_id == 4) {
            unsigned int(7) attrldx;
            bit(15) reserved = 0;
       }
       else
            bit(22) reserved = 0;
   } else if (flags == 1) {
            unsigned int(8) tile_id;
            bit(24) reserved = 0;
   }
```

The above tile_id indicates an identifier (ID) of an atlas tile associated with the subsample.

The above type_id indicates a type of a V3C unit in the subsample.

The above attrldx indicates that the subsample includes an attribute index of the V3C unit of the attribute data.

In this embodiment, one or more packed video bitstream subsamples that correspond to one or more atlas tiles are identified according to an identifier of an atlas tile in the subsample information box, and the one or more atlas tiles correspond to 3D spatial regions of volumetric media.

### Alternative embodiment 2: a V3C atlas tile track

Fig. 10 is a schematic diagram 5 of a V3C container file encapsulated into a plurality of tracks according to an embodiment. As shown in Fig. 10, a V3C bitstream is encapsulated into a V3C atlas track, one or more V3C atlas tile tracks, and one or more packed video component tracks of an ISO base media file. The V3C atlas track and the V3C atlas tile track include atlas coding sub-bitstreams, and the packed video component track includes a packed video coding sub-bitstream of a V3C video component (for example, geometry data, attribute data, and occupancy map data). The V3C atlas track includes reference to the V3C atlas tile track, and the V3C atlas track includes reference to the packed video component track.

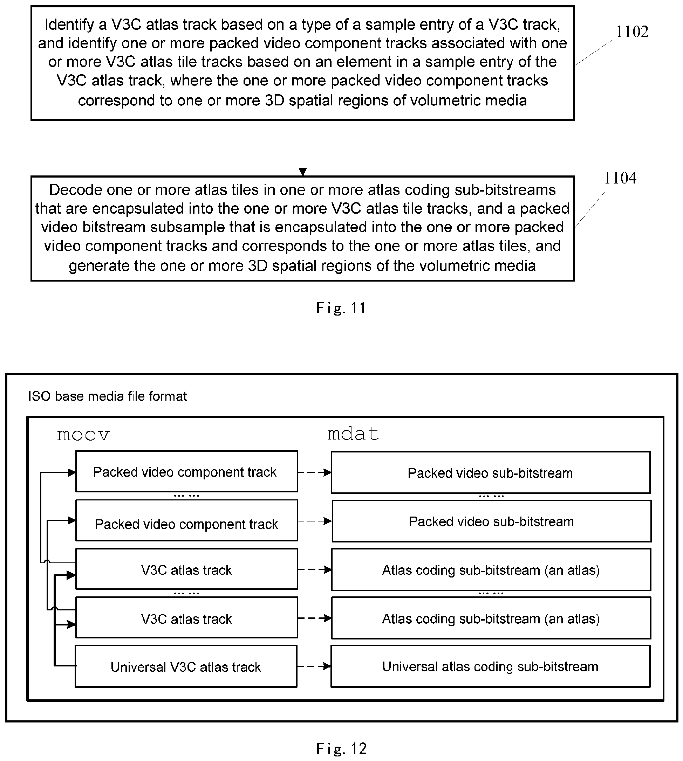

Fig. 11 is a flowchart 2 of a method for processing volumetric media according to a preferred embodiment, as shown in Fig. 11, the method includes:
Step 1102: a V3C atlas track is identified based on a type of a sample entry of a V3C track, and one or more packed video component tracks associated with one or more V3C atlas tile tracks are identified based on an element in a sample entry of the V3C atlas track, where the one or more packed video component tracks correspond to one or more 3D spatial regions of volumetric media.

Step 1104: one or more atlas tiles in one or more atlas coding sub-bitstreams that are encapsulated into the one or more V3C atlas tile tracks are undecoded, and a packed video bitstream subsample that is encapsulated into the one or more packed video component tracks and corresponds to the one or more atlas tiles are decoded, and the one or more 3D spatial regions of the volumetric media are generated.

Step 1102 records a process that the V3C atlas tile track and the packed video component track that correspond to the three-dimensional spatial regions of the volumetric media are identified based on the element in the sample entry of the V3C atlas track. The element in the sample entry of the V3C atlas track will be described in conjunction with an alternative embodiment below.

The sample entry of the V3C atlas track includes a V3C spatial region data box (V3CspatialRegionsBox), and the V3C spatial region data box provides a static three-dimensional spatial region in the volumetric media and its associated track information, as defined as follows:

| Box Types: | 'vpsr' |
|---|---|
| Container: | V3CAtlasSampleEntry ('v3c1' or 'v3cg') or DynamicVolumetricMetadataSampleEntry |
| Mandatory: | No |
| Quantity: | Zero or one |

```
   Syntax
   aligned(8) class V3CSpatialRegionsBox extends FullBox('vpsr', 0 ,0) {
       bit(1) all_tiles_in_single_track_flag;
       bit(1) packed_video_track_flag;
       bit(7) reserved = 0;
       unsigned int(16) num_regions;
       for (i=0; i < num_regions; i++) {
           3dSpatialRegionStruct(1);
           if (all_tiles_in_single_track_flag) {
              unsigned int(8) num_track_groups;
              for (j=0; j < num_track_groups; j++) {
                  unsigned int(32) component_track_group_id;
                  unsigned int(8) num tiles;
                  for (k=0; k < num_tiles; k++) {
                      unsigned int(16) tile_id;
                  }
              }
           } else {
              unsigned int(8) num_tile_tracks;
              for (j=0; j < num_tile_tracks; j++) {
                 if (packed_video_track_flag) {
                    unsigned int(32) packed_video_track_id;
                    unsigned int(8) num tiles;
                   for (k=0; k < num_tiles; k++) {
                      unsigned int(16) tile_id; }
                 } else {
                    unsigned int(32) tile_track_id;
                 }
              }
           }
       }
   }
```

The above all_tiles_in_single_track_flag indicates whether all atlas tiles of the atlas coding sub-bitstream are encapsulated into the V3C atlas track or separately encapsulated into V3C atlas tile tracks. A value of 1 indicates that all the atlas tiles are encapsulated into the V3C atlas track, and a value of 0 indicates that the atlas tiles are encapsulated into separate atlas tile tracks.

The above packed_video_track_flag indicates whether the V3C atlas track reference to the packed video component track. A value of 1 indicates presence of the packed video component track associated with the V3C atlas track, and a value of 0 indicates absence of the packed video component track associated with the V3C atlas track.

The above num_regions indicates the number of 3D spatial regions in the volumetric media.

The above packed_video_track_id indicates a packed video component track identifier associated with the 3D spatial region.

The above num_tile indicates the number of atlas tiles associated with the 3D spatial region.

The above tile_id indicates an atlas coding NAL unit including an atlas tile corresponding to the 3D spatial region.

Step 1104 records a process that the atlas tile in the atlas coding sub-bitstream that is encapsulated into the V3C atlas tile track is decoded, and the packed video bitstream subsample that is encapsulated into the one or more packed video component tracks and corresponds to the atlas tile is decoded, and V3C data of the 3D spatial region of the volumetric media are generated.

### Alternative embodiment 3: a plurality of V3C atlas tracks

Fig. 12 is a schematic diagram 6 of a V3C container file encapsulated into a plurality of tracks according to an embodiment. As shown in Fig. 12, a V3C bitstream is encapsulated into the plurality of V3C atlas track (with one universal V3C atlas track) and one or more packed video component tracks of an ISO base media file. The V3C atlas track includes an atlas coding sub-bitstream, and the packed video component track includes a packed video coding sub-bitstream of a V3C video component (for example, geometry data, attribute data, and occupancy map data). The universal V3C atlas track includes reference to other V3C atlas tracks, and the other V3C atlas tracks include reference to the packed video component track.

The universal V3C atlas track is identified based on a type of a sample entry of a V3C track, and one or more packed video component tracks associated with one or more V3C atlas tracks are identified based on an element in a sample entry of the universal V3C atlas track, where the one or more packed video component tracks correspond to one or more 3D spatial regions of volumetric media.

The universal V3C atlas track is identified based on the type of the sample entry of the V3C track, and one or more V3C atlas tile tracks associated with the one or more V3C atlas tracks are identified based on the element in the sample entry of the universal V3C atlas track, where the one or more V3C atlas tile tracks correspond to the one or more 3D spatial regions of the volumetric media.

The element in the sample entry of the universal V3C atlas track will be described in conjunction with an alternative embodiment below.

The sample entry of the universal V3C atlas track includes a V3C spatial region data box (V3CspatialRegionsBox), and the V3C spatial region data box provides a static three-dimensional spatial region in the volumetric media and its associated track information, as defined as follows:

| Box Types: | 'vpsr' |
|---|---|
| Container: | V3CAtlasSampleEntry ('v3cb') or DynamicVolumetricMetadataSampleEntry |
| Mandatory: | No |
| Quantity: | Zero or one |

```
Syntax
   aligned(8) class V3CSpatialRegionsBox extends FullBox('vpsr', 0 ,0) {
       bit(1) all_tiles_in_single atlas_flag;
       bit(1) all_tiles_in_single_track_flag;
       bit(6) reserved = 0;
       unsigned int(16) num_regions;
       for (i=0; i < num_regions; i++) {
            3dSpatialRegionStruct(1);
            if (!all_tiles_in_single atlas_flag) {
                unsigned int(8) num_v3c tracks;
                for (j=0; j < num v3c tracks; j++) {
                    bit(1) packed_video_track_flag;
                    if (packed_video_track_flag) {
                         unsigned int(32) packed video track_id;
                         unsigned int(8) num_tiles;
                     for (k=0; k < num_tiles; k++) {
                           unsigned int(16) tile_id;
                     }
                }else {
                     if (all_tiles_in_single_track_flag) {
                       unsigned int(8) num_track_groups;
                       for (j=0; j < num_track_groups; j++) {
                          unsigned int(32) component_track_group_id;
                          unsigned int(8) num_tiles;
                          for (k=0; k < num_tiles; k++) {
                              unsigned int(16) tile_id;
                          }
                        }
                     } else {
                         unsigned int(8) num_tile_tracks;
                         for (j=0; j < num_tile_tracks; j++) {
                             unsigned int(32) tile_track_id;
                         }
                     }
                    }
                }
            }
       }
   } 
```

The above all_tiles_in_single atlas_flag indicates whether all atlas tiles of the atlas coding sub-bitstream are encapsulated into one V3C atlas track or encapsulated into different V3C atlas tracks. A value of 1 indicates that all the atlas tiles are encapsulated into one V3C atlas track, and a value of 0 indicates that the atlas tiles are encapsulated into different atlas tile tracks.

The above all_tiles_in_single_track_flag indicates whether all atlas tiles of the atlas coding sub-bitstream are encapsulated into the V3C atlas track or separately encapsulated into V3C atlas tile tracks. A value of 1 indicates that all the atlas tiles are encapsulated into the V3C atlas track, and a value of 0 indicates that the atlas tiles are encapsulated into separate atlas tile tracks.

The above num_regions indicates the number of 3D spatial regions in the volumetric media.

The above num_v3c_tracks indicates the number of 3D spatial regions in the volumetric media.

The above packed_video_track_flag indicates whether the V3C atlas track reference to the packed video component track. A value of 1 indicates presence of the packed video component track associated with the V3C atlas track, and a value of 0 indicates absence of the packed video component track associated with the V3C atlas track.

The above packed_video_track_id indicates a packed video component track identifier associated with the 3D spatial region.

The above num_tile indicates the number of atlas tiles associated with the 3D spatial region.

The above tile_id indicates an atlas coding NAL unit including an atlas tile corresponding to the 3D spatial region.

### Embodiment 2: a method for processing volumetric media including a dynamic spatial region

### Alternative embodiment 1: a single V3C atlas track

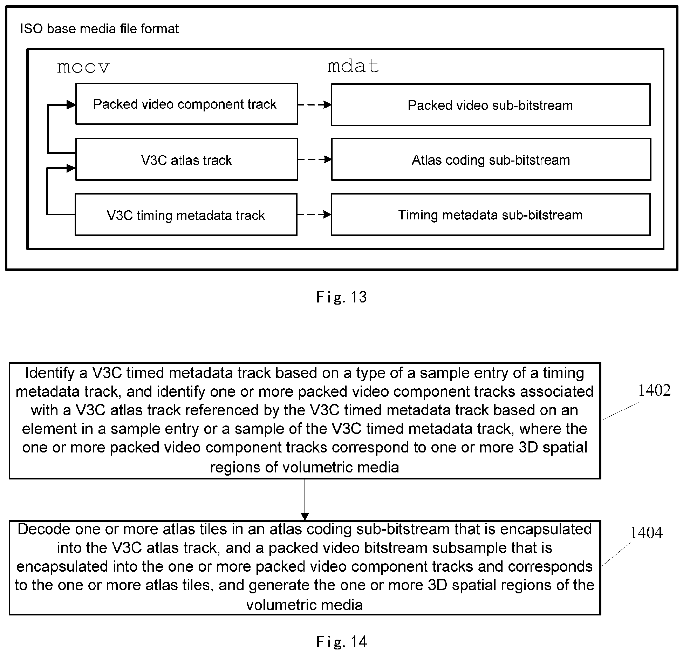

Fig. 13 is a schematic diagram 7 of a V3C container file encapsulated into a plurality of tracks according to an embodiment. As shown in Fig. 13, as an alternative embodiment of the disclosure, a V3C bitstream is encapsulated into a V3C atlas track and a packed video component track of an ISO base media file. The V3C atlas track includes an atlas coding sub-bitstream, and the packed video component track includes a packed video coding sub-bitstream of a V3C video component (for example, geometry data, attribute data, and occupancy map data). The V3C atlas track includes reference to the packed video component track.

If the V3C atlas track has an associated timed metadata track and a type of a sample entry of "dyvm", a 3D spatial region in the volumetric media packed by the V3C atlas track will be regarded as a dynamic region (that is, spatial region information may change dynamically). The associated timed metadata track should include reference to a "cdsc" track, and reference to the V3C atlas track including the atlas bitstream.

Fig. 14 is a flowchart 3 of a method for processing volumetric media according to a preferred embodiment. As shown in Fig. 14, the method includes:
Step 1402: a V3C timed metadata track is identified based on a type of a sample entry of a timed metadata track, and one or more packed video component tracks associated with a V3C atlas track referenced by the V3C timed metadata track are identified based on an element in a sample entry or a sample of the V3C timed metadata track, where the one or more packed video component tracks correspond to one or more 3D spatial regions of the volumetric media.

Step 1404: one or more atlas tiles in an atlas coding sub-bitstream that is encapsulated into the V3C atlas track are decoded, and a packed video bitstream subsample that is encapsulated into the one or more packed video component tracks and corresponds to the one or more atlas tiles are decoded, and the one or more 3D spatial regions of the volumetric media are generated.

Step 1402 records a process that the V3C atlas track and the packed video component track that correspond to the three-dimensional spatial regions of the volumetric media are identified based on the element in the sample entry or the sample of the V3C timed metadata track. The element in the sample entry or the sample of the V3C timed metadata track will be described in conjunction with an alternative embodiment below.

The sample entry and its sample format of the V3C timed metadata track are defined below:

```
   Sample entry
 aligned(8) class DynamicVolumetricMetadataSampleEntry extends MetaDataSampleEntry('dyvm')
 {
   V3CSpatialRegionsBox();
 }
   Sample format
   Syntax
   aligned(8) class V3CVolumetricMetadataSample() {
       bit(1) region_updates_flag;
       bit(1) packed_video_track_flag;
       bit(6) reserved = 0;
       if (region_updates_flag) {
            unsigned int(16) num_regions;
            for (i=0; i < num_regions; i++) {
                3DSpatial_RegionStruct(dimensions_included_flag);
                bit(1) update_mapping_flag;
                bit(7) reserved = 0;
                if (update_mapping_flag) {
                    if (all_tiles_in_single_track_flag) {
                         if (packed_video_track_flag) {
                           unsigned int(32) packed_video_track_id;
                           unsigned int(8) num_tiles;
                           for (k=0; k < num_tiles; k++) {
                               unsigned int(16) tile_id;
                           }
                         } else {
                            unsigned int(8) num_track_groups;
                            for (j=0; j < num_track_groups; j++) {
                                unsigned int(32) component_track_group_id;
                                unsigned int(8) num tiles;
                                for (k=0; k < num_tiles; k++) {
                                   unsigned int(16) tile_id;
                                }
                            }
                    } else {
                        unsigned int(8) num_tile_tracks;
                        for (j=0; j < num_tile_tracks; j++) {
                           unsigned int(32) tile_track_id;
                         }
                    }
                }
            }
       }
   }
```

The above region_updates_flag indicates whether a timed metadata sample includes an update of the 3D spatial region.

The above update_mapping_flag indicates whether mapping between the spatial region and the atlas tile is updated. A value of 1 indicates presence of updated mapping, and a value of 0 indicates absence of update.

The above num_regions indicates the number of 3D spatial regions in the volumetric media.

The above packed_video_track_flag indicates whether the V3C atlas track reference to the packed video component track. A value of 1 indicates presence of the packed video component track associated with the V3C atlas track, and a value of 0 indicates absence of the packed video component track associated with the V3C atlas track.

The above all_tiles_in_single_track_flag indicates whether all atlas tiles of the atlas coding sub-bitstream are encapsulated into the V3C atlas track or separately encapsulated into V3C atlas tile tracks. A value of 1 indicates that all the atlas tiles are encapsulated into the V3C atlas track, and a value of 0 indicates that the atlas tiles are encapsulated into separate atlas tile tracks.

The above packed_video_track_id indicates a packed video component track identifier associated with the 3D spatial region.

The above num_tile indicates the number of atlas tiles associated with the 3D spatial region.

The above tile_id indicates an atlas coding NAL unit including an atlas tile corresponding to the 3D spatial region.

### Alternative embodiment 2: a V3C atlas tile track

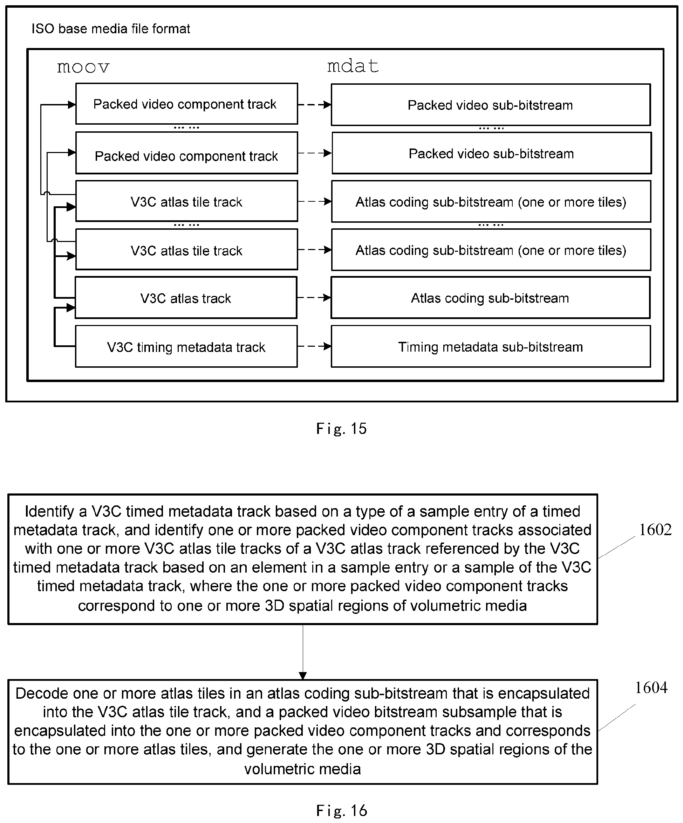

Fig. 15 is a schematic diagram 8 of a V3C container file encapsulated into a plurality of tracks according to an embodiment. As shown in Fig. 15, as an alternative embodiment of the disclosure, a V3C bitstream is encapsulated into a V3C atlas track, one or more V3C atlas tile tracks, and one or more packed video component tracks of an ISO base media file. The V3C atlas track and the V3C atlas tile track include atlas coding sub-bitstreams, and the packed video component track includes a packed video coding sub-bitstream of a V3C video component (for example, geometry data, attribute data, and occupancy map data). The V3C atlas track includes reference to the V3C atlas tile track, and the V3C atlas track includes reference to the packed video component track.

If the V3C atlas track has an associated timed metadata track and a type of a sample entry of "dyvm", a 3D spatial region in the volumetric media packed by the V3C atlas track will be regarded as a dynamic region (that is, spatial region information may change dynamically). The associated timed metadata track should include reference to a "cdsc" track, and reference to the V3C atlas track including the atlas bitstream.

Fig. 16 is a flowchart 5 of a method for processing volumetric media according to a preferred embodiment. As shown in Fig. 16, the method includes:
Step 1602: a V3C timed metadata track is identified based on a type of a sample entry of a timed metadata track, and one or more packed video component tracks associated with one or more V3C atlas tile tracks of a V3C atlas track referenced by the V3C timed metadata track are identified based on an element in a sample entry or a sample of the V3C timed metadata track, where the one or more packed video component tracks correspond to one or more 3D spatial regions of the volumetric media.

Step 1604: one or more atlas tiles in an atlas coding sub-bitstream that is encapsulated into the V3C atlas tile track are decoded, and a packed video bitstream subsample that is encapsulated into the one or more packed video component tracks and corresponds to the one or more atlas tiles is decoded, and the one or more 3D spatial regions of the volumetric media are generated.

Step 1602 records a process that the V3C atlas tile track and the packed video component track that correspond to the three-dimensional spatial regions of the volumetric media are identified based on the element in the sample entry or the sample of the V3C timed metadata track. The element in the sample entry or the sample of the V3C timed metadata track will be described in conjunction with an alternative embodiment below.

The sample entry and its sample format of the V3C timed metadata track are defined below:

```
   Sample entry
 aligned(8) class DynamicVolumetricMetadataSampleEntry extends MetaDataSampleEntry('dyvm')
 {
   V3CSpatialRegionsBox();
 }
   Sample format
   Syntax
   aligned(8) class V3CVolumetricMetadataSample() {
       bit(1) region_updates_flag;
       bit(1) packed_video_track_flag;
       bit(6) reserved = 0;
        if (region_updates_flag) {
            unsigned int(16) num_regions;
            for (i=0; i < num_regions; i++) {
                3DSpatial_RegionStruct(dimensions_included_flag);
                bit(1) update_mapping_flag;
                bit(7) reserved = 0;
                if (update_mapping_flag) {
                    if (all_tiles_in_single_track_flag) {
                      unsigned int(8) num_track_groups;
                      for (j=0; j < num_track_groups; j++) {
                         unsigned int(32) component_track_group_id;
                         unsigned int(8) num_tiles;
                         for (k=0; k < num_tiles; k++) {
                             unsigned int(16) tile_id;
                      }
                     }
                   } else {
                      unsigned int(8) num_tile_tracks;
                      for (j=0; j < num_tile_tracks; j++) {
                        if (packed_video_track_flag) {
                           unsigned int(32) packed_video_track_id;
                           unsigned int(8) num_tiles;
                          for (k=0; k < num_tiles; k++) {
                              unsigned int(16)tile_id;
                          }
                        } else {
                           unsigned int(32) tile_track_id;
                      }
                }
            }
        }
       }
   }
 }
```

### Alternative embodiment 3: a plurality of V3C atlas tracks

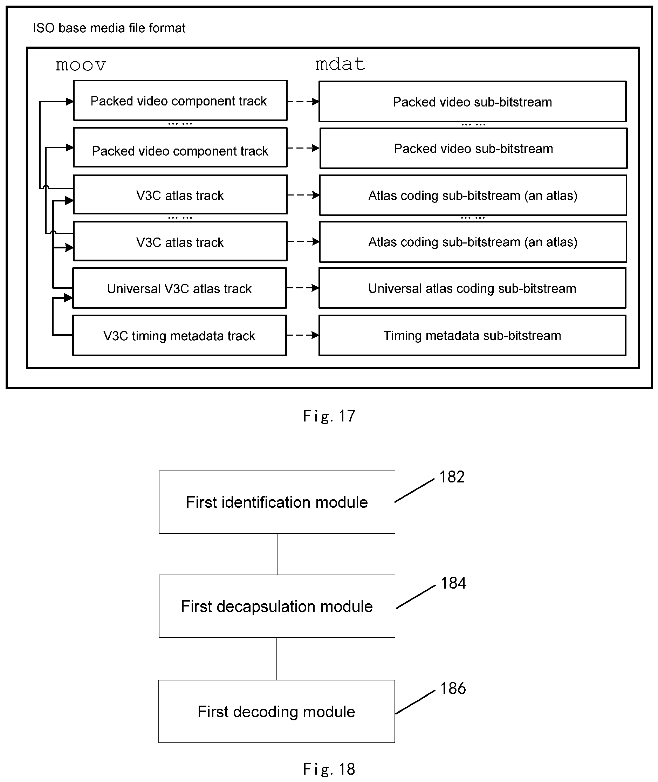

Fig. 17 is a schematic diagram 9 of a V3C container file encapsulated into a plurality of tracks according to an embodiment. As shown in Fig. 17, as an alternative embodiment of the disclosure, a V3C bitstream is encapsulated into the plurality of V3C atlas track (with one universal V3C atlas track) and one or more packed video component tracks of an ISO base media file. The V3C atlas track includes an atlas coding sub-bitstream, and the packed video component track includes a packed video coding sub-bitstream of a V3C video component (for example, geometry data, attribute data, and occupancy map data). The universal V3C atlas track includes reference to other V3C atlas tracks, and the other V3C atlas tracks include reference to the packed video component track.

If the V3C atlas track has an associated timed metadata track and a type of a sample entry of "dyvm", a 3D spatial region in the volumetric media packed by the V3C atlas track will be regarded as a dynamic region (that is, spatial region information may change dynamically). The associated timed metadata track should include reference to a "cdsc" track, and reference to the V3C atlas track including the atlas bitstream.

The V3C atlas track and the packed video component track that correspond to the three-dimensional spatial regions of the volumetric media are identified based on the element in the sample entry or the sample of the V3C timed metadata track.

The V3C atlas track and the V3C atlas tile track that correspond to the three-dimensional spatial regions of the volumetric media are identified based on the element in the sample entry or the sample of the V3C timed metadata track.

The element in the sample entry or the sample of the V3C timed metadata track will be described in conjunction with an alternative embodiment below.

```
   Sample entry
 aligned(8) class DynamicVolumetricMetadataSampleEntry extends MetaDataSampleEntry('dyvm')
   { V3CSpatialRegionsBox();
   }
   Sample format
   Syntax
   aligned(8) class V3CVolumetricMetadataSample() {
       bit(1) region_updates_flag;
       bit(6) reserved = 0;
        if (region_updates_flag) {
            unsigned int(16) num_regions;
            for (i=0; i < num_regions; i++) {
                3DSpatial_RegionStruct(dimensions_included_flag);
                bit(1) update_mapping_flag;
                bit(7) reserved = 0;
                if (update_mapping_flag) {
                    if (!all_tiles_in_single atlas_flag) {
                       unsigned int(8) num_v3c tracks;
                       for (j=0; j < num v3c tracks; j++) {
                       bit(1) packed_video_track_flag;
                        if (packed_video_track_flag) {
                           unsigned int(32) packed video track id;
                           unsigned int(8) num_tiles;
                           for (k=0; k < num_tiles; k++) {
                             unsigned int(16) tile_id;
                           }
                        }else {
                          if (all_tiles_in_single_track_flag) {
                            unsigned int(8) num_track_groups;
                            for (j=0; j < num_track_groups; j++) {
                               unsigned int(32) component_track_group_id;
                               unsigned int(8) num tiles;
                               for (k=0; k < num_tiles; k++) {
                                 unsigned int(16) tile_id;
                               }
                            }
                          } else {
                              unsigned int(8) num_tile_tracks;
                              for (j=0; j < num_tile_tracks; j++) {
                                unsigned int(32) tile_track_id;
                              }
                          }
                       }
                    }
                }
            }
        }
       }
   }
```

The above region_updates_flag indicates whether a timed metadata sample includes an update of the 3D spatial region.

The above update_mapping_flag indicates whether mapping between the spatial region and the atlas tile is updated. A value of 1 indicates presence of updated mapping, and a value of 0 indicates absence of update.

The above all_tiles_in_single atlas_flag indicates whether all atlas tiles of the atlas coding sub-bitstream are encapsulated into one V3C atlas track or encapsulated into different V3C atlas tracks. A value of 1 indicates that all the atlas tiles are encapsulated into one V3C atlas track, and a value of 0 indicates that the atlas tiles are encapsulated into different atlas tile tracks.

The above num_regions indicates the number of 3D spatial regions in the volumetric media.

The above num_v3c_tracks indicates the number of 3D spatial regions in the volumetric media.

The above all_tiles_in_single_track_flag indicates whether all atlas tiles of the atlas coding sub-bitstream are encapsulated into the V3C atlas track or separately encapsulated into V3C atlas tile tracks. A value of 1 indicates that all the atlas tiles are encapsulated into the V3C atlas track, and a value of 0 indicates that the atlas tiles are encapsulated into separate atlas tile tracks.

The above packed_video_track_flag indicates whether the V3C atlas track reference to the packed video component track. A value of 1 indicates presence of the packed video component track associated with the V3C atlas track, and a value of 0 indicates absence of the packed video component track associated with the V3C atlas track.

The above packed_video_track_id indicates a packed video component track identifier associated with the 3D spatial region.

The above num_tile indicates the number of atlas tiles associated with the 3D spatial region.

The above tile_id indicates an atlas coding NAL unit including an atlas tile corresponding to the 3D spatial region.

According to another aspect of this embodiment, an apparatus for processing volumetric media is further provided. Fig. 18 is a block diagram 1 of an apparatus for processing volumetric media according to an embodiment. As shown in Fig. 18, the apparatus includes:
a first identification module 182 configured to identify a V3C track and a V3C component track from a container file of a V3C bitstream of the volumetric media, where the V3C track and the V3C component track correspond to 3D spatial regions of the volumetric media;
a first decapsulation module 184 configured to obtain one or more atlas coding sub-bitstreams by decapsulating the V3C track, and obtain one or more video coding sub-bitstreams that correspond to the one or more atlas coding sub-bitstreams by decapsulating the V3C component track; and
a first decoding module 186 configured to decode the one or more atlas coding sub-bitstreams and the one or more video coding sub-bitstreams, and generate V3C data of the 3D spatial region of the volumetric media.

In an illustrative embodiment, the first identification module 182 is further configured to:
identify one or more V3C atlas tracks based on a type of a sample entry of the V3C track, and identify one or more packed video component tracks based on the one or more V3C atlas tracks, where the V3C track includes the one or more V3C atlas tracks, and the V3C component track includes the one or more packed video component tracks.

In an illustrative embodiment, the first identification module 182 includes:
a first identification sub-module configured to identify the one or more V3C atlas tracks based on the type of the sample entry of the V3C track, and identify one or more packed video component tracks referenced by the V3C atlas track based on an element in a sample entry of the one or more V3C atlas tracks; or
a second identification sub-module configured to identify the one or more V3C atlas tracks based on the type of the sample entry of the V3C track, identify one or more V3C atlas tile tracks referenced by the one or more V3C atlas tracks based on an element in a sample entry of the one or more V3C atlas tracks, and identify one or more packed video component tracks referenced by the one or more V3C atlas tile tracks.

In an illustrative embodiment, the first identification module 182 is further configured to:
identify one or more V3C atlas tracks based on a V3C timed metadata track, and identify one or more packed video component tracks based on the one or more V3C atlas tracks, where the V3C track includes the one or more V3C atlas tracks, and the V3C component track includes the one or more packed video component tracks.

In an illustrative embodiment, the first identification module 182 includes:
a third identification sub-module configured to identify the V3C timed metadata track based on a type of a sample entry of a timed metadata track, identify one or more V3C atlas tracks referenced by the V3C timed metadata track based on an element in a sample entry or a sample of the V3C timed metadata track, and identify one or more packed video component tracks referenced by the one or more V3C atlas tracks; or
a fourth identification sub-module configured to identify the V3C timed metadata track based on the type of the sample entry of the timed metadata track, identify the one or more V3C atlas tracks referenced by the V3C timed metadata track based on the element in the sample entry or the sample of the V3C timed metadata track, identify one or more V3C atlas tile tracks referenced by the one or more V3C atlas tracks, and identify one or more packed video component tracks referenced by the one or more V3C atlas tile tracks.

In an illustrative embodiment, the first decoding module 186 is further configured to:
decode the one or more atlas coding sub-bitstreams that are encapsulated into the V3C track, and the one or more video coding sub-bitstreams that are encapsulated into the V3C component track and correspond to the one or more atlas coding sub-bitstreams.

In an illustrative embodiment, the first decoding module 186 includes:
a first decoding sub-module configured to decode one or more atlas tiles in one or more atlas coding sub-bitstreams that are encapsulated into one or more V3C atlas tracks, and one or more packed video sub-bitstreams that are encapsulated into one or more packed video component tracks and correspond to the one or more atlas tiles, where the one or more video coding sub-bitstreams are the one or more packed video sub-bitstreams, the V3C track includes the one or more V3C atlas tracks, and the V3C component track includes the one or more packed video component tracks; or
a second decoding sub-module configured to decode one or more atlas tiles in one or more atlas coding sub-bitstreams that are encapsulated into one or more V3C atlas tile tracks, and one or more packed video sub-bitstreams that are encapsulated into one or more packed video component tracks and correspond to the one or more atlas tiles, where the V3C track includes the one or more V3C atlas tile tracks, and the V3C component track includes the one or more packed video component tracks.

In an illustrative embodiment, the first decoding module 186 is further configured to:
decode one or more atlas tiles in one or more atlas coding sub-bitstreams that are encapsulated into one or more V3C atlas tracks, and one or more packed video bitstream subsamples that are encapsulated into one or more packed video component tracks and correspond to the one or more atlas tiles, where the one or more video coding sub-bitstreams include the one or more packed video bitstream subsamples, the V3C track includes the one or more V3C atlas tracks, and the V3C component track includes the one or more packed video component tracks.

In an illustrative embodiment, the packed video bitstream subsample includes one or more V3C units that correspond to one atlas tile, where the V3C unit includes at least geometry data, attribute data and occupancy map data.

In an illustrative embodiment, the packed video bitstream subsample includes one V3C unit, where the V3C unit includes at least geometry data, attribute data and occupancy map data.

In an illustrative embodiment, the video coding sub-bitstream includes at least one of an occupancy map data bitstream, a geometry data bitstream, an attribute data bitstream, and a packed video data bitstream.

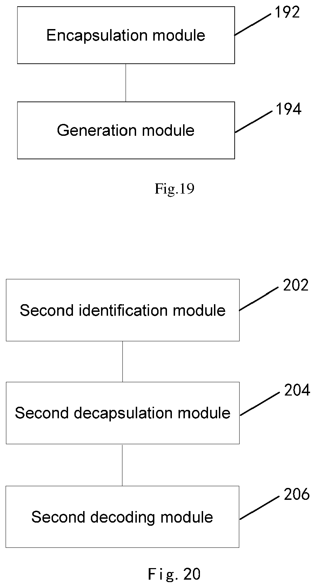

According to another aspect of this embodiment, an apparatus for processing volumetric media is further provided. Fig. 19 is a block diagram 2 of an apparatus for processing volumetric media according to an embodiment. As shown in Fig. 19, the apparatus includes:
a encapsulating module 192 configured to pack one or more atlas coding sub-bitstreams into a V3C track, and pack one or more video coding sub-bitstreams that correspond to the one or more atlas coding sub-bitstreams into a V3C component track; and
a generation module 194 configured to generate a container file of a V3C bitstream of the volumetric media according to the V3C track and the V3C component track, where the V3C track and the V3C component track correspond to one or more 3D spatial regions of the volumetric media.

In an illustrative embodiment, the encapsulating module 192 includes:
a first encapsulating sub-module configured to pack the one or more atlas coding sub-bitstreams into one or more V3C atlas tracks, and pack one or more packed video sub-bitstreams that correspond to the one or more atlas coding sub-bitstreams into one or more packed video component tracks, where the V3C track includes the one or more V3C atlas tracks, the V3C component track includes the one or more packed video component tracks, and the one or more video coding sub-bitstreams are the one or more packed video sub-bitstreams.

In an illustrative embodiment, the first encapsulating sub-module includes:
a first encapsulating unit configured to pack one or more atlas tiles in the one or more atlas coding sub-bitstreams into the one or more V3C atlas tracks, and pack one or more packed video sub-bitstreams that correspond to the one or more atlas tiles into the one or more packed video component tracks.

In an illustrative embodiment, the first encapsulating unit is further configured to:
pack the one or more atlas coding sub-bitstreams into the one or more V3C atlas tracks, pack the one or more atlas tiles in the one or more atlas coding sub-bitstreams into the one or more V3C atlas tile tracks, and pack the one or more packed video sub-bitstreams that correspond to the one or more atlas tiles into the one or more packed video component tracks, where the one or more V3C atlas tile tracks reference to the one or more packed video component tracks.

In an illustrative embodiment, the first encapsulating sub-module includes:
a second encapsulating unit configured to pack a timed metadata bitstream into a V3C timed metadata track, pack the one or more atlas coding sub-bitstreams into the one or more V3C atlas tracks, and pack a packed video bitstream subsample that corresponds to the one or more atlas coding sub-bitstreams into the one or more packed video component tracks, where the V3C timed metadata track reference to the one or more V3C atlas tracks, and the one or more V3C atlas tracks reference to the one or more packed video component tracks.

In an illustrative embodiment, the second encapsulating unit is further configured to:
pack the one or more atlas coding sub-bitstreams into the one or more V3C atlas tracks, pack one or more atlas tiles in the one or more atlas coding sub-bitstreams into one or more V3C atlas tile tracks, and pack one or more packed video sub-bitstreams that correspond to the one or more atlas tiles into the one or more packed video component tracks, where the one or more V3C atlas tracks reference to the one or more V3C atlas tile tracks, and the one or more V3C atlas tile tracks reference to the one or more packed video component tracks.

In an illustrative embodiment, the encapsulating module 192 includes:
a second encapsulating sub-module configured to pack one or more atlas tiles in the one or more atlas coding sub-bitstreams into one or more V3C atlas tracks, and pack packed video bitstream subsamples that correspond to the one or more atlas tiles into one or more packed video component tracks, where the one or more video coding sub-bitstreams include the one or more packed video bitstream subsamples, the V3C track includes the one or more V3C atlas tracks, and the V3C component track includes the one or more packed video component tracks.

In an illustrative embodiment, the packed video bitstream subsample includes one or more V3C units that correspond to one atlas tile, where the V3C unit includes at least geometry data, attribute data and occupancy map data.

In an illustrative embodiment, the packed video bitstream subsample includes one V3C unit, where the V3C unit includes at least geometry data, attribute data and occupancy map data.

In an illustrative embodiment, the video coding sub-bitstream includes at least one of an occupancy map data bitstream, a geometry data bitstream, an attribute data bitstream, and a packed video data bitstream.

According to another aspect of this embodiment, an apparatus for processing volumetric media is further provided. Fig. 20 is a block diagram 3 of an apparatus for processing volumetric media according to an embodiment. As shown in Fig. 20, the apparatus includes:
a second identification module 202 configured to identify a V3C atlas track from a container file of a V3C bitstream of the volumetric media, and identify one or more atlas tiles based on an element in a sample entry of the V3C atlas track, where the one or more atlas tiles correspond to 3D spatial regions of the volumetric media;
a second decapsulation module 204 configured to obtain one or more atlas coding sub-bitstreams by decapsulating the V3C atlas track, and obtain one or more video coding sub-bitstreams by decapsulating one or more V3C component tracks that correspond to the one or more atlas tiles; and
a second decoding module 206 configured to decode the one or more atlas coding sub-bitstreams and the one or more video coding sub-bitstreams, and generate the 3D spatial region of the volumetric media.

In an illustrative embodiment, the second decapsulation module 204 is further configured to:
identify the one or more V3C component tracks from the container file of the V3C bitstream of the volumetric media, where an element in a sample entry of the one or more V3C component tracks includes an identifier of the one or more atlas tiles.

In another illustrative embodiment, the second decapsulation module 204 is further configured to:
identify one or more packed video component tracks from the container file of the V3C bitstream of the volumetric media, where an element in a sample entry of the one or more V3C component tracks includes an identifier of the one or more atlas tiles, and the one or more V3C component tracks include the one or more packed video component tracks.

In an illustrative embodiment, the apparatus further includes:
a third identification module configured to identify one or more packed video component tracks from the container file of the V3C bitstream of the volumetric media, where a subsample information box of the one or more packed video component tracks includes an identifier of the one or more atlas tiles, and the one or more V3C component tracks include the one or more packed video component tracks.

In an illustrative embodiment, the second decoding module 206 is further configured to:
decode the one or more atlas tiles in the one or more atlas coding sub-bitstreams, and one or more packed video bitstream subsamples that are in the one or more video coding sub-bitstreams and correspond to the one or more atlas tiles.

In an illustrative embodiment, the packed video bitstream subsample includes one or more V3C units that correspond to one atlas tile, where the V3C unit includes at least geometry data, attribute data and occupancy map data.

In another illustrative embodiment, the packed video bitstream subsample includes one V3C unit, where the V3C unit includes at least geometry data, attribute data and occupancy map data.

In this embodiment, the video coding sub-bitstream includes at least one of an occupancy map data bitstream, a geometry data bitstream, an attribute data bitstream, and a packed video data bitstream.

According to the embodiment of the disclosure, a computer-readable storage medium is further provided. The computer-readable storage medium stores a computer program, where the computer program is configured to execute steps of any method embodiment above when being run.

In an illustrative embodiment, the computer-readable storage medium above may include, but is not restricted to, a USB flash drive, a read-only memory (ROM), a random access memory (RAM), a mobile hard disk drive, a diskette or optical disk, etc., that may store the computer program.

The embodiment of the disclosure further provides an electronic apparatus. The electronic apparatus includes a memory and a processor, where the memory stores a computer program, and the processor is configured to execute steps of any method embodiment above by running the computer program.

In an illustrative embodiment, the electronic apparatus may further include a transmission device and an input and output device, where the transmission device is connected to the processor above and the input and output device is connected to the processor above.

Reference can be made to instances described in the embodiments and illustrative embodiments above for specific instances in this embodiment, which will not be repeated in this embodiment.

Apparently, a person skilled in the art shall understand that the modules or steps above of the disclosure can be implemented by a general-purpose computation apparatus, can be centralized on a single computation apparatus or distributed over a network formed by a plurality of computation apparatuses, and can be implemented through program codes executable by the computation apparatus, such that the modules or steps can be stored in a storage apparatus and executed by the computation apparatus. In some cases, the steps shown or described can be executed in a sequence different from a sequence described herein, or the steps can be separately made into integrated circuit modules, or a plurality of modules or steps among the steps can be made into a singe integrated circuit module to be implemented. In this way, the disclosure is not restricted to any specific hardware and software combination.

What is described above is merely a preferred embodiment of the disclosure and is not intended to limit the disclosure, and for those skilled in the art, various modifications and changes can be made to the disclosure. Any modification, equivalent substitution, improvement, etc. made according to principles of the disclosure should fall within the protection scope of the disclosure.

## Claims

1. A method for processing volumetric media, comprising:
identifying a Visual Volumetric Video-based Coding (V3C) track and a V3C component track from a container file of a V3C bitstream of the volumetric media, wherein the V3C track and the V3C component track correspond to three-dimensional (3D) spatial regions of the volumetric media;
obtaining one or more atlas coding sub-bitstreams by decapsulating the V3C track, and obtaining one or more video coding sub-bitstreams that correspond to the one or more atlas coding sub-bitstreams by decapsulating the V3C component track; and
decoding the one or more atlas coding sub-bitstreams and the one or more video coding sub-bitstreams, and generating the 3D spatial region of the volumetric media.

2. The method according to claim 1, wherein the identifying a V3C track and a V3C component track from a container file of a V3C bitstream of the volumetric media comprises:
identifying one or more V3C atlas tracks based on a type of a sample entry of the V3C track, and identifying one or more packed video component tracks based on the one or more V3C atlas tracks, wherein the V3C track comprises the one or more V3C atlas tracks, and the V3C component track comprises the one or more packed video component tracks.

3. The method according to claim 2, wherein the identifying one or more V3C atlas tracks based on a type of a sample entry of the V3C track, and the identifying one or more packed video component tracks based on the one or more V3C atlas tracks comprise:
identifying the one or more V3C atlas tracks based on the type of the sample entry of the V3C track, and identifying one or more packed video component tracks referenced by the V3C atlas track based on an element in a sample entry of the one or more V3C atlas tracks; or
identifying the one or more V3C atlas tracks based on the type of the sample entry of the V3C track, identifying one or more V3C atlas tile tracks referenced by the one or more V3C atlas tracks based on an element in a sample entry of the one or more V3C atlas tracks, and identifying one or more packed video component tracks referenced by the one or more V3C atlas tile tracks.

4. The method according to claim 1, wherein the identifying a V3C track and a V3C component track from a container file of a V3C bitstream of the volumetric media comprises:
identifying one or more V3C atlas tracks based on a V3C timed metadata track, and identifying one or more packed video component tracks based on the one or more V3C atlas tracks, wherein the V3C track comprises the one or more V3C atlas tracks, and the V3C component track comprises the one or more packed video component tracks.

5. The method according to claim 4, wherein the identifying one or more V3C atlas tracks based on a V3C timed metadata track, and the identifying one or more packed video component tracks based on the one or more V3C atlas tracks comprise:
identifying the V3C timed metadata track based on a type of a sample entry of a timed metadata track, identifying the one or more V3C atlas tracks referenced by the V3C timed metadata track based on an element in a sample entry or a sample of the V3C timed metadata track, and identifying the one or more packed video component tracks referenced by the one or more V3C atlas tracks; or
identifying the V3C timed metadata track based on a type of a sample entry of a timed metadata track, identifying one or more V3C atlas tracks referenced by the V3C timed metadata track based on an element in a sample entry or a sample of the V3C timed metadata track, identifying one or more V3C atlas tile tracks referenced by the one or more V3C atlas tracks, and identifying one or more packed video component tracks referenced by the one or more V3C atlas tile tracks.

6. The method according to claim 1, wherein the decoding the one or more atlas coding sub-bitstreams and the one or more video coding sub-bitstreams comprises:
decoding the one or more atlas coding sub-bitstreams that are encapsulated into the V3C track, and the one or more video coding sub-bitstreams that are encapsulated into the V3C component track and correspond to the one or more atlas coding sub-bitstreams.

7. The method according to claim 6, wherein the decoding the one or more atlas coding sub-bitstreams that are encapsulated into the V3C track, and the one or more video coding sub-bitstreams that are encapsulated into the V3C component track and correspond to the one or more atlas coding sub-bitstreams comprises:
decoding one or more atlas tiles in one or more atlas coding sub-bitstreams that are encapsulated into one or more V3C atlas tracks, and one or more packed video sub-bitstreams that are encapsulated into one or more packed video component tracks and correspond to the one or more atlas tiles, wherein the one or more video coding sub-bitstreams are the one or more packed video sub-bitstreams, the V3C track comprises the one or more V3C atlas tracks, and the V3C component track comprises the one or more packed video component tracks; or
decoding one or more atlas tiles in one or more atlas coding sub-bitstreams that are encapsulated into one or more V3C atlas tile tracks, and one or more packed video sub-bitstreams that are encapsulated into one or more packed video component tracks and correspond to the one or more atlas tiles, wherein the V3C track comprises the one or more V3C atlas tile tracks, and the V3C component track comprises the one or more packed video component tracks.

8. The method according to claim 1, wherein the decoding the one or more atlas coding sub-bitstreams and the one or more video coding sub-bitstreams comprises:
decoding one or more atlas tiles in one or more atlas coding sub-bitstreams that are encapsulated into one or more V3C atlas tracks, and one or more packed video bitstream subsamples that are encapsulated into one or more packed video component tracks and correspond to the one or more atlas tiles, wherein the one or more video coding sub-bitstreams comprise the one or more packed video bitstream subsamples, the V3C track comprises the one or more V3C atlas tracks, and the V3C component track comprises the one or more packed video component tracks.

9. The method according to claim 8, wherein
the packed video bitstream subsample comprises one or more V3C units that correspond to one atlas tile, wherein the V3C unit comprises at least geometry data, attribute data and occupancy map data.

10. The method according to claim 8, wherein
the packed video bitstream subsample comprises one V3C unit, wherein the V3C unit comprises at least geometry data, attribute data and occupancy map data.

11. The method according to any one of claims 1-10, wherein
the video coding sub-bitstream comprises at least one of an occupancy map data bitstream, a geometry data bitstream, an attribute data bitstream, and a packed video data bitstream.

12. A method for processing volumetric media, comprising:
encapsulating one or more atlas coding sub-bitstreams into a Visual Volumetric Video-based Coding (V3C) track, and encapsulating one or more video coding sub-bitstreams that correspond to the one or more atlas coding sub-bitstreams into a V3C component track; and
generating a container file of a V3C bitstream of the volumetric media according to the V3C track and the V3C component track, wherein the V3C track and the V3C component track correspond to one or more 3D spatial regions of the volumetric media.

13. The method according to claim 12, wherein the encapsulating one or more atlas coding sub-bitstreams into a V3C track, and the encapsulating one or more video coding sub-bitstreams that correspond to the one or more atlas coding sub-bitstreams into a V3C component track comprise:
encapsulating the one or more atlas coding sub-bitstreams into one or more V3C atlas tracks, and encapsulating one or more packed video sub-bitstreams that correspond to the one or more atlas coding sub-bitstreams into one or more packed video component tracks, wherein the V3C track comprises the one or more V3C atlas tracks, the V3C component track comprises the one or more packed video component tracks, and the one or more video coding sub-bitstreams are the one or more packed video sub-bitstreams.

14. The method according to claim 13, wherein the encapsulating the one or more atlas coding sub-bitstreams into one or more V3C atlas tracks, and the encapsulating one or more packed video sub-bitstreams that correspond to the one or more atlas coding sub-bitstreams into one or more packed video component tracks comprise:
encapsulating one or more atlas tiles in the one or more atlas coding sub-bitstreams into the one or more V3C atlas tracks, and encapsulating one or more packed video sub-bitstreams that correspond to the one or more atlas tiles into the one or more packed video component tracks.

15. The method according to claim 14, wherein the encapsulating one or more atlas tiles in the one or more atlas coding sub-bitstreams into the one or more V3C atlas tracks, and the encapsulating one or more packed video sub-bitstreams that correspond to the one or more atlas tiles into the one or more packed video component tracks comprise:
encapsulating the one or more atlas coding sub-bitstreams into the one or more V3C atlas tracks, encapsulating the one or more atlas tiles in the one or more atlas coding sub-bitstreams into the one or more V3C atlas tile tracks, and encapsulating the one or more packed video sub-bitstreams that correspond to the one or more atlas tiles into the one or more packed video component tracks, wherein the one or more V3C atlas tile tracks reference to the one or more packed video component tracks.

16. The method according to claim 13, wherein the encapsulating the one or more atlas coding sub-bitstreams into one or more V3C atlas tracks, and the encapsulating one or more packed video sub-bitstreams that correspond to the one or more atlas coding sub-bitstreams into one or more packed video component tracks comprise:
encapsulating a timed metadata bitstream into a V3C timed metadata track, encapsulating the one or more atlas coding sub-bitstreams into the one or more V3C atlas tracks, and encapsulating a packed video bitstream subsample that corresponds to the one or more atlas coding sub-bitstreams into the one or more packed video component tracks, wherein the V3C timed metadata track reference to the one or more V3C atlas tracks, and the one or more V3C atlas tracks reference to the one or more packed video component tracks.

17. The method according to claim 16, wherein the encapsulating the one or more atlas coding sub-bitstreams into the one or more V3C atlas tracks, and the encapsulating a packed video bitstream subsample that corresponds to the one or more atlas coding sub-bitstreams into the one or more packed video component tracks comprise:
encapsulating the one or more atlas coding sub-bitstreams into the one or more V3C atlas tracks, encapsulating one or more atlas tiles in the one or more atlas coding sub-bitstreams into one or more V3C atlas tile tracks, and encapsulating one or more packed video sub-bitstreams that correspond to the one or more atlas tiles into the one or more packed video component tracks, wherein the one or more V3C atlas tracks reference to the one or more V3C atlas tile tracks, and the one or more V3C atlas tile tracks reference to the one or more packed video component tracks.

18. The method according to claim 12, wherein the encapsulating one or more atlas coding sub-bitstreams into a V3C track, and the encapsulating one or more video coding sub-bitstreams that correspond to the one or more atlas coding sub-bitstreams into a V3C component track comprise:
encapsulating one or more atlas tiles in the one or more atlas coding sub-bitstreams into one or more V3C atlas tracks, and encapsulating packed video bitstream subsamples that correspond to the one or more atlas tiles into one or more packed video component tracks, wherein the one or more video coding sub-bitstreams comprise the one or more packed video bitstream subsamples, the V3C track comprises the one or more V3C atlas tracks, and the V3C component track comprises the one or more packed video component tracks.

19. The method according to claim 18, wherein
the packed video bitstream subsample comprises one or more V3C units that correspond to one atlas tile, wherein the V3C unit comprises at least geometry data, attribute data and occupancy map data.

20. The method according to claim 18, wherein
the packed video bitstream subsample comprises one V3C unit, wherein the V3C unit comprises at least geometry data, attribute data and occupancy map data.

21. The method according to any one of claims 12-20, wherein
the video coding sub-bitstream comprises at least one of an occupancy map data bitstream, a geometry data bitstream, an attribute data bitstream, and a packed video data bitstream.

22. A method for processing volumetric media, comprising:
identifying a Visual Volumetric Video-based Coding (V3C) atlas track from a container file of a V3C bitstream of the volumetric media, and identifying one or more atlas tiles based on an element in a sample entry of the V3C atlas track, wherein the one or more atlas tiles correspond to 3D spatial regions of the volumetric media;
obtaining one or more atlas coding sub-bitstreams by decapsulating the V3C atlas track, and obtaining one or more video coding sub-bitstreams by decapsulating one or more V3C component tracks that correspond to the one or more atlas tiles; and
decoding the one or more atlas coding sub-bitstreams and the one or more video coding sub-bitstreams, and generating the 3D spatial region of the volumetric media.

23. The method according to claim 22, wherein the obtaining one or more video coding sub-bitstreams by decapsulating one or more V3C component tracks that correspond to the one or more atlas tiles comprises:
identifying the one or more V3C component tracks from the container file of the V3C bitstream of the volumetric media, wherein an element in a sample entry of the one or more V3C component tracks comprises an identifier of the one or more atlas tiles.

24. The method according to claim 22, wherein the obtaining one or more video coding sub-bitstreams by decapsulating one or more V3C component tracks that correspond to the one or more atlas tiles comprises:
identifying one or more packed video component tracks from the container file of the V3C bitstream of the volumetric media, wherein an element in a sample entry of the one or more V3C component tracks comprises an identifier of the one or more atlas tiles, and the one or more V3C component tracks comprise the one or more packed video component tracks.

25. The method according to claim 22, further comprising:
identifying one or more packed video component tracks from the container file of the V3C bitstream of the volumetric media, wherein a subsample information box of the one or more packed video component tracks comprises an identifier of the one or more atlas tiles, and the one or more V3C component tracks comprise the one or more packed video component tracks.

26. The method according to claim 22, wherein the decoding the one or more atlas coding sub-bitstreams and the one or more video coding sub-bitstreams comprises:
decoding the one or more atlas tiles in the one or more atlas coding sub-bitstreams, and one or more packed video bitstream subsamples that are in the one or more video coding sub-bitstreams and correspond to the one or more atlas tiles.

27. The method according to claim 26, wherein
the packed video bitstream subsample comprises one or more V3C units that correspond to one atlas tile, wherein the V3C unit comprises at least geometry data, attribute data and occupancy map data.

28. The method according to claim 26, wherein
the packed video bitstream subsample comprises one V3C unit, wherein the V3C unit comprises at least geometry data, attribute data and occupancy map data.

29. The method according to any one of claims 22-28, wherein
the video coding sub-bitstream comprises at least one of an occupancy map data bitstream, a geometry data bitstream, an attribute data bitstream, and a packed video data bitstream.

30. An apparatus for processing volumetric media, comprising:
a first identification module, configured to identify a Visual Volumetric Video-based Coding (V3C) track and a V3C component track from a container file of a V3C bitstream of the volumetric media, wherein the V3C track and the V3C component track correspond to 3D spatial regions of the volumetric media;
a first decapsulation module, configured to obtain one or more atlas coding sub-bitstreams by decapsulating the V3C track, and obtain one or more video coding sub-bitstreams that correspond to the one or more atlas coding sub-bitstreams by decapsulating the V3C component track; and
a first decoding module, configured to decode the one or more atlas coding sub-bitstreams and the one or more video coding sub-bitstreams, and generate V3C data of the 3D spatial region of the volumetric media.

31. An apparatus for processing volumetric media, comprising:
a encapsulating module, configured to pack one or more atlas coding sub-bitstreams into a Visual Volumetric Video-based Coding (V3C) track, and pack one or more video coding sub-bitstreams that correspond to the one or more atlas coding sub-bitstreams into a V3C component track; and
a generation module, configured to generate a container file of a V3C bitstream of the volumetric media according to the V3C track and the V3C component track, wherein the V3C track and the V3C component track correspond to one or more 3D spatial regions of the volumetric media.

32. An apparatus for processing volumetric media, comprising:
a second identification module, configured to identify a Visual Volumetric Video-based Coding (V3C) atlas track from a container file of a V3C bitstream of the volumetric media, and identify one or more atlas tiles based on an element in a sample entry of the V3C atlas track, wherein the one or more atlas tiles correspond to 3D spatial regions of the volumetric media;
a second decapsulation module, configured to obtain one or more atlas coding sub-bitstreams by decapsulating the V3C atlas track, and obtain one or more video coding sub-bitstreams by decapsulating one or more V3C component tracks that correspond to the one or more atlas tiles; and
a second decoding module, configured to decode the one or more atlas coding sub-bitstreams and the one or more video coding sub-bitstreams, and generate the 3D spatial region of the volumetric media.

33. A computer-readable storage medium, storing a computer program, wherein the computer program is configured to, when executed by a processor, perform the method according to any one of claims 1-11, clams 12-21 or claims 22-29.

34. An electronic apparatus, comprising a memory and a processor, wherein the memory stores a computer program, and the processor is configured to execute the computer program to perform the method according to any one of claims 1-11, clams 12-21 or claims 22-29.
